(19) Europäisches Patentamt
European Patent Office
Office européen des brevets

(11) **EP 3 115 585 A1**

(12) **EUROPEAN PATENT APPLICATION**

(43) Date of publication:
**11.01.2017 Bulletin 2017/02**

(51) Int Cl.:
***F02D 41/14*** *(2006.01)*     ***F02D 41/22*** *(2006.01)*
***F02D 35/02*** *(2006.01)*

(21) Application number: **16178355.0**

(22) Date of filing: **07.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.07.2015 JP 2015136934**

(71) Applicant: **Toyota Jidosha Kabushiki Kaisha Toyota-shi, Aichi-ken, 471-8571 (JP)**

(72) Inventors:
• **SASAKI, Keisuke**
**TOYOTA-SHI, AICHI-KEN, 471-8571 (JP)**
• **SAKAYANAGI, Yoshihiro**
**TOYOTA-SHI, AICHI-KEN, 471-8571 (JP)**

(74) Representative: **Intès, Didier Gérard André et al Cabinet Beau de Loménie**
**158 rue de l'Université**
**75340 Paris Cedex 07 (FR)**

(54) **CONTROL APPARATUS FOR INTERNAL COMBUSTION ENGINE**

(57)     A control apparatus for an internal combustion engine (10) is configured to: calculate measured data of MFB in synchrony with crank angle based on in-cylinder pressure detected by an in-cylinder pressure sensor (30); execute engine control based on a measured value of a specified fraction combustion point that is calculated based on the measured data of MFB; calculate a first correlation index value ($\alpha$) for MFB and a second correlation index value ($\beta$) for dMFB/d$\theta$; and suspend the engine control when the first correlation index value ($\alpha$) is less than a first determination value ($\alpha_{th1}$) and the second correlation index value ($\beta$) is greater than or equal to a second determination value ($\beta_{th}$).

Fig. 9

**Description**

**Technical Field**

The present disclosure relates to a control apparatus for an internal combustion engine, and more particularly to a control apparatus for an internal combustion engine that is suitable as an apparatus for controlling an internal combustion engine that includes an in-cylinder pressure sensor.

**Background Art**

In Japanese Patent Laid-Open No. 2008-069713, a combustion control apparatus for an internal combustion engine that includes an in-cylinder pressure sensor is disclosed. In the combustion control apparatus, data of mass fraction burned that is synchronized with a crank angle is calculated using an in-cylinder pressure sensor and a crank angle sensor, and an actual combustion start point and a combustion center are calculated based on the data. In addition, if a difference obtained by subtracting the actual combustion start point from the combustion center exceeds an upper limit, the combustion control apparatus determines that combustion has deteriorated, and implements a countermeasure for improving combustion, such as increasing the fuel injection amount. Note that, in Japanese Patent Laid-Open No. 2008-069713, as one example, an appropriate value in a period in which mass fraction burned is from 10 to 30 percent is used as the aforementioned actual combustion start point that is a crank angle at which combustion is actually started in a cylinder, and, for example, an appropriate value in a period in which mass fraction burned is from 40 to 60 percent is used as the combustion center.

Following is a list of patent documents which may be related to the present disclosure.

[Patent Document 1]
Japanese Patent Laid-Open No. 2008-069713
[Patent Document 2]
Japanese Patent Laid-Open No. 2014-025380
[Patent Document 3]
Japanese Patent Laid-Open No. 2006-169996
[Patent Document 4]
Japanese Patent Laid-Open No. 2012-077729

**Technical Problem**

Noise may be superimposed on an output signal of an in-cylinder pressure sensor due to various factors. Where engine control is performed based on a crank angle at which mass fraction burned (MFB) reaches a specified mass fraction burned (hereunder, the crank angle is referred to as a "specified fraction combustion point") as disclosed in Japanese Patent Laid-Open No. 2008-069713, the specified fraction combustion point is calculated based on measured data of MFB. If noise is superimposed on an output signal of the in-cylinder pressure sensor, noise is also superimposed on the measured data of MFB that is based on measured data of the in-cylinder pressure. Consequently, an error that is caused by noise may arise with respect to a specified fraction combustion point that is utilized for engine control. If engine control based on a specified fraction combustion point is performed without giving any particular consideration to this kind of noise, there is a possibility that the accuracy of the engine control will deteriorate. Therefore, where engine control based on a specified fraction combustion point is performed, it is necessary to adopt a configuration that can appropriately detect that noise is superimposed on measured data of MFB, and to also ensure that an appropriate countermeasure is implemented when noise is detected.

On the other hand, an in-cylinder pressure detected by the in-cylinder pressure sensor may include an error due to thermal strain of a sensor tip part (thermal strain error). The measured data of MFB is also affected by the influence of the thermal strain. Because of this, if discrimination between the influence of noise on the measured data of MFB and the influence of thermal strain cannot be properly made, it is difficult to accurately grasp a change in the measured data for MFB due to the influence of noise. As a result, taking appropriately measures against noise may become difficult.

**Summary of the Invention**

The present disclosure has been made to address the above described problem, and an object of the present disclosure is to provide a control apparatus for an internal combustion engine that can accurately determine that measured data of MFB is affected by the influence of noise and can perform, using results of the determination, engine control based on a specified fraction combustion point with appropriate measures against the noise.

**EP 3 115 585 A1**

A control apparatus for an internal combustion engine according to the present disclosure includes: an in-cylinder pressure sensor configured to detect an in-cylinder pressure; a crank angle sensor configured to detect a crank angle; mass fraction burned calculation means configured to calculate measured data of mass fraction burned that is synchronized with crank angle, based on an in-cylinder pressure detected by the in-cylinder pressure sensor and a crank angle detected by the crank angle sensor; control means configured to calculate, based on the measured data of mass fraction burned, a measured value of a specified fraction combustion point that is a crank angle at which mass fraction burned reaches a specified fraction, and to execute engine control that controls an actuator of the internal combustion engine based on the measured value of the specified fraction combustion point; first correlation index value calculation means configured to calculate a first correlation index value that indicates a degree of correlation between the measured data of mass fraction burned and reference data of mass fraction burned, the reference data of mass fraction burned being based on an operating condition of the internal combustion engine; and second correlation index value calculation means configured to calculate a second correlation index value by taking as an object a first specified crank angle period that includes at least a part of a first crank angle period out of the first crank angle period and a second crank angle period, the second correlation index value indicating a degree of correlation between measured first order differentiation data and reference first order differentiation data, the measured first order differentiation data being obtained by differentiating the measured data of mass fraction burned with reference to the crank angle, the reference first order differentiation data being obtained by differentiating the reference data of mass fraction burned with respect to the crank angle, the first crank angle period being a period to an opening timing of an exhaust valve from a heat release amount maximum crank angle at which a heat release amount inside a cylinder reaches a maximum value, the second crank angle period being a period from a closing timing of an intake valve to a combustion start point. The control means is configured, when a determination that the first correlation index value is less than a first determination value and the second correlation index value is greater than or equal to a second determination value is made, to suspend reflection, in the engine control, of the measured value of the specified fraction combustion point in a combustion cycle in which the first and second correlation index values used for the determination are calculated, or to lower a degree of the reflection in comparison to that when the first correlation index value is greater than or equal to the first determination value.

The control apparatus may further include third correlation index value calculation means configured to calculate a third correlation index value by taking as an object the first specified crank angle period, the third correlation index value indicating a degree of correlation between measured second order differentiation data and reference second order differentiation data, the measured second order differentiation data being obtained by differentiating the measured first order differentiation data with reference to the crank angle, the reference second order differentiation data being obtained by differentiating the reference first order differentiation data with respect to the crank angle. The control means may be configured, when a determination that the third correlation index value is less than a third determination value is made under a situation in which the first correlation index value is less than the first determination value and the second correlation index value is less than the second determination value, to suspend reflection, in the engine control, of the measured value of the specified fraction combustion point in a combustion cycle in which the first, second and third correlation index values used for the determination are calculated, or to lower a degree of the reflection in comparison to that when the first correlation index value is greater than or equal to the first determination value.

The control apparatus may further include: heat release amount calculation means configured to calculate measured data of heat release amount that is synchronized with the crank angle, based on an in-cylinder pressure detected by the in-cylinder pressure sensor and a crank angle detected by the crank angle sensor; and fourth correlation index value calculation means configured to calculate a fourth correlation index value by taking as an object a second specified crank angle period, the fourth correlation index value indicating a degree of correlation between the measured data of the heat release amount and reference data of the heat release amount, the second specified crank angle period including at least a part of a third crank angle period from a combustion start point to an opening timing of the exhaust valve, the reference data of the heat release amount being based on the operating condition and a reference value of a maximum heat release amount. The control means may be configured, when a determination that the first correlation index value is greater than or equal to the first determination value and the fourth correlation index value is less than a fourth determination value, to suspend reflection, in the engine control, of the measured value of the specified fraction combustion point in a combustion cycle in which the first and fourth correlation index values used for the determination are calculated, or to lower a degree of the reflection in comparison to that when the fourth correlation index value is greater than or equal to the fourth determination value.

The control means may be configured, when a determination that the first correlation index value is less than a fifth determination value that is less than the first determination value and the second correlation index value is less than the second determination value, to suspend reflection, in the engine control, of the measured value of the specified fraction combustion point in a combustion cycle in which the first and second correlation index values used for the determination are calculated, or to lower a degree of the reflection in comparison to that when the first correlation index value is greater than or equal to the first determination value.

The first correlation index value that indicates the degree of correlation between measured data and reference data of mass fraction burned (MFB) becomes small when the measured data of MFB is affected by the influence of any of noise and thermal strain. On the other hand, the second correlation index value that is calculated by taking as an object the aforementioned specified crank angle period and that indicates the degree of correlation between measured first order differentiation data and reference first order differentiation data of MFB becomes larger at a time of being affected by the influence of noise than at a time of being affected by the influence of thermal strain. Therefore, according to the present disclosure, by utilizing these first and second correlation index values, it can be determined accurately that measured data of MFB is affected by the influence of noise. Further, it is possible to suppress, utilizing results of the determination, the occurrence of a situation in which an error in a specified fraction combustion point that is caused by noise is reflected as it is in engine control. Consequently, engine control based on a specified fraction combustion point can be performed in association with appropriate measures against the noise.

**Brief Description of the Drawings**

Fig. 1 is a view for describing a system configuration according to a first embodiment of the present disclosure;
Fig. 2 is a view that represents a waveform of mass fraction burned (MFB) and a spark timing (SA);
Fig. 3 is a block diagram for describing an outline of two types of feedback control utilizing CA10 and CA50 that an ECU executes;
Fig. 4A and Fig. 4B are views for concretely describing the influence that noise superimposed on in-cylinder pressure data imparts to engine control;
Fig. 5 is a view for describing a method for performing noise detection by determining the degree of correlation between reference data and measured data of MFB;
Fig. 6 is a view for representing the influence of noise on measured data of MFB and the influence of thermal strain thereon;
Fig. 7 is a view for representing the influence of noise and influence of thermal strain on measured data of $dMFB/d\theta$;
Fig. 8 is a diagram that collectively shows the relation between the influences of noise and thermal strain, and the magnitude of the correlation index values $\alpha$, $\beta$ of the respective measured data of MFB and its differentiation value $dMFB/d\theta$;
Fig. 9 is a flowchart illustrating a routine that the ECU executes in the first embodiment of the present disclosure;
Fig. 10 is a view for describing one example of a method for creating reference data of MFB;
Fig. 11 is a flowchart illustrating a routine that the ECU executes in a second embodiment of the present disclosure;
Fig. 12A to Fig. 12C are views for explaining the characteristics of waveforms of data of a second order differentiation value of MFB ($d^2MFB/d\theta^2$) while comparing them with waveforms of data of MFB and $dMFB/d\theta$;
Fig. 13 is a diagram that collectively shows the relation between the influences of noise and thermal strain, and the magnitude of the correlation index values $\alpha$, $\beta$ and $\gamma$;
Fig. 14 is a flowchart illustrating a routine that the ECU executes in a third embodiment of the present disclosure;
Fig. 15A and Fig. 15B are views for explaining the influences of noise, thermal strain and output sensitivity degradation on measured data of each of the heat release amount Q and MFB;
Fig. 16 is a flowchart illustrating a routine that the ECU executes in a fourth embodiment of the present disclosure; and
Fig. 17 is a view for explaining one example of a method for creating reference data of the heat release amount Q.

**Detailed Description**

First Embodiment

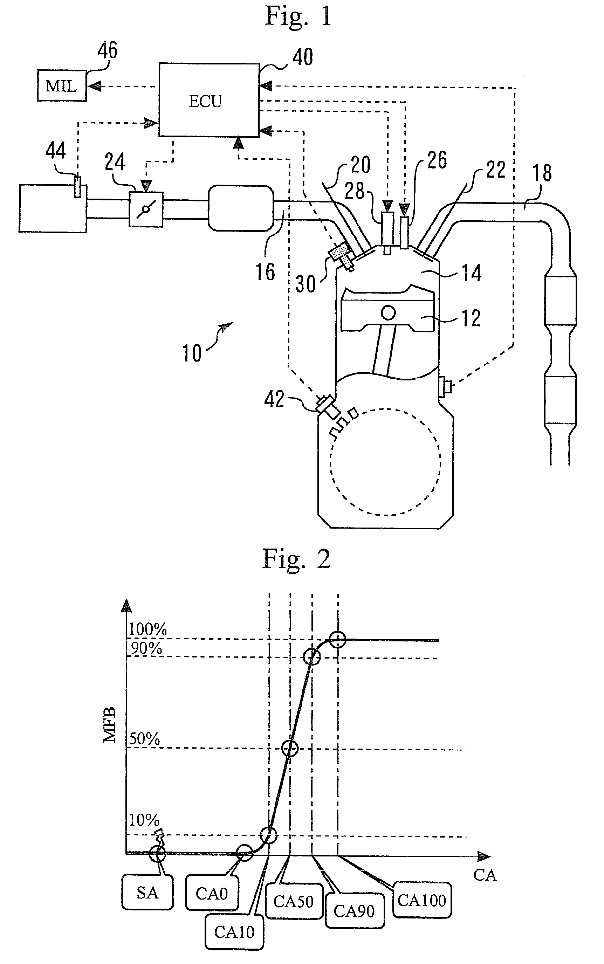

Firstly, a first embodiment of the present disclosure will be described with reference to Fig. 1 to Fig. 10.

[System Configuration of First Embodiment]

Fig. 1 is a view for describing a system configuration according to a first embodiment of the present disclosure. The system shown in Fig. 1 includes a spark-ignition type internal combustion engine 10. A piston 12 is provided in each cylinder of the internal combustion engine 10. A combustion chamber 14 is formed on the top side of the piston 12 inside the respective cylinders. An intake passage 16 and an exhaust passage 18 communicate with the combustion chamber 14.

An intake valve 20 is provided in an intake port of the intake passage 16. The intake valve 20 opens and closes the intake port. An exhaust valve 22 is provided in an exhaust port of the exhaust passage 18. The exhaust valve 22 opens and closes the exhaust port. An electronically controlled throttle valve 24 is provided in the intake passage 16. Each cylinder of the internal combustion engine 10 is provided with a fuel injection valve 26 for injecting fuel directly into the combustion chamber 14 (into the cylinder), and an ignition device (only a spark plug is illustrated in the drawings) 28 for igniting an air-fuel mixture. An in-cylinder pressure sensor 30 for detecting an in-cylinder pressure is also mounted in each cylinder.

The system of the present embodiment also includes a control apparatus that controls the internal combustion engine 10. The control apparatus includes an electronic control unit (ECU) 40, drive circuits (not shown in the drawings) for driving various actuators and various sensors that are described below and the like, as a control apparatus that controls the internal combustion engine 10. The ECU 40 includes an input/output interface, a memory, and a central processing unit (CPU). The input/output interface is configured to receive sensor signals from various sensors installed in the internal combustion engine 10 or the vehicle in which the internal combustion engine 10 is mounted, and to also output actuating signals to various actuators for controlling the internal combustion engine 10. Various control programs and maps for controlling the internal combustion engine 10 are stored in the memory. The CPU reads out a control program or the like from the memory and executes the control program, and generates actuating signals for various actuators based on the received sensor signals.

The sensors from which the ECU 40 receives signals include, in addition to the aforementioned in-cylinder pressure sensor 30, various sensors for acquiring the engine operating state such as a crank angle sensor 42 that is arranged in the vicinity of a crank shaft (not illustrated in the drawings), and an air flow sensor 44 that is arranged in the vicinity of an inlet of the intake passage 16.

The actuators to which the ECU 40 outputs actuating signals include various actuators for controlling operation of the engine such as the above described throttle valve 24, fuel injection valve 26 and ignition device 28. Moreover, a malfunction indicator lamp (MIL) 46 for notifying the driver of the occurrence of malfunction about the in-cylinder pressure sensor 30 is connected to the ECU 40. The ECU 40 also has a function that synchronizes an output signal of the in-cylinder pressure sensor 30 with a crank angle, and subjects the synchronized signal to AD conversion and acquires the resulting signal. It is thereby possible to detect an in-cylinder pressure at an arbitrary crank angle timing in a range allowed by the AD conversion resolution. In addition, the ECU 40 stores a map in which the relation between a crank angle and an in-cylinder volume is defined, and can refer to the map to calculate an in-cylinder volume that corresponds to a crank angle.

[Engine Control in First Embodiment]

(Calculation of measured data of MFB utilizing in-cylinder pressure sensor)

Fig. 2 is a view that represents a waveform of mass fraction burned (MFB) and a spark timing (SA). According to the system of the present embodiment that includes the in-cylinder pressure sensor 30 and the crank angle sensor 42, in each cycle of the internal combustion engine 10, measured data of an in-cylinder pressure P can be acquired in synchrony with a crank angle (more specifically, a set of in-cylinder pressures P that are calculated as values for the respective predetermined crank angles). A heat release amount Q inside a cylinder at an arbitrary crank angle θ can be calculated according to the following equations (1) and (2) using the measured data of the in-cylinder pressure P and the first law of thermodynamics. Furthermore, a mass fraction burned (hereunder, referred to as "MFB") at an arbitrary crank angle θ can be calculated in accordance with the following equation (3) using the measured data of the heat release amount Q inside a cylinder (more specifically, a set of heat release amounts Q calculated as values for the respective predetermined crank angles). Further, measured data of MFB (measured MFB set) that is synchronized with the crank angle can be calculated by executing processing to calculate the MFB at each predetermined crank angle. The measured data of MFB is calculated in a combustion period and in a predetermined crank angle period before and after the combustion period (here, as one example, the crank angle period is from a closing timing IVC of the intake valve 20 to an opening timing EVO of the exhaust valve 22).

$$dQ/d\theta = \frac{1}{\kappa-1} \times \left( V \times \frac{dP}{d\theta} + P \times \kappa \times \frac{dV}{d\theta} \right) \quad \cdots (1)$$

$$Q = \sum \frac{dQ}{d\theta} \quad \cdots (2)$$

$$MFB = \frac{Q(\theta) - Q(\theta_{min})}{Q(\theta_{max}) - Q(\theta_{min})} \times 100 \quad \cdots \quad (3)$$

Where, in the above equation (1), V represents an in-cylinder volume and $\kappa$ represents a ratio of specific heat of in-cylinder gas. Further, in the above equation (3), $\theta_{min}$ represents a combustion start point and $\theta_{max}$ represents a combustion end point.

According to the measured data of MFB that is calculated by the above method, a crank angle at which MFB reaches a specified fraction X (%) (hereunder, referred to as "specified fraction combustion point", and indicated by attaching "CAX") can be acquired. More specifically, when acquiring the specified fraction combustion point CAX, although there is a possibility that a value of the specified fraction X is successfully included in the measured data of MFB, where the value is not included, the specified fraction combustion point CAX can be calculated by interpolation based on measured data located on both sides of the specified fraction X. Hereunder, in the present description, a value of CAX that is acquired utilizing measured data of MFB is referred to as a "measured CAX". A typical specified fraction combustion point CAX will now be described with reference to Fig. 2. Combustion in a cylinder starts with an ignition delay after igniting an air-fuel mixture is performed at the spark timing (SA). A start point of the combustion ($\theta_{min}$ in the above described equation (3)), that is, a crank angle at which MFB starts to rise is referred to as "CA0". A crank angle period (CA0-CA10) from CA0 until a crank angle CA10 at which MFB reaches 10% corresponds to an initial combustion period, and a crank angle period (CA10-CA90) from CA10 until a crank angle CA90 at which MFB reaches 90% corresponds to a main combustion period. Further, according to the present embodiment, a crank angle CA50 at which MFB reaches 50% is used as a combustion center. A crank angle CA100 at which MFB reaches 100% corresponds to a combustion end point ($\theta_{max}$ in the above described equation (3)) at which the heat release amount Q reaches a maximum value. The combustion period is defined as a crank angle period from CA0 to CA100.

(Engine control utilizing CAX)

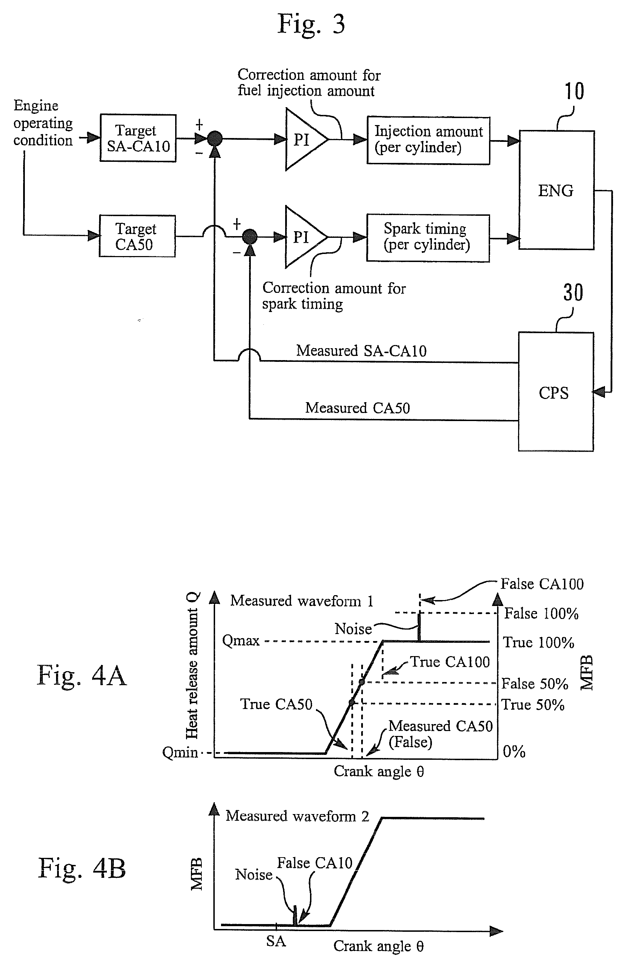

Fig. 3 is a block diagram for describing an outline of two types of feedback control utilizing CA10 and CA50 that the ECU 40 executes. The engine control that the ECU 40 performs includes control utilizing a specified fraction combustion point CAX. Here, as examples of engine control utilizing a specified fraction combustion point CAX, two types of feedback control that utilize CA10 and CA50, respectively, will be described. According to the present embodiment, these controls are executed during lean-burn operation that is performed at a larger (leaner) air-fuel ratio than the stoichiometric air-fuel ratio.

1. Feedback Control of Fuel Injection Amount Utilizing SA-CA10

In this feedback control, CA10 that is the 10% combustion point is not taken as a direct target value, but is instead utilized as follows. That is, in the present description, a crank angle period from the spark timing SA to CA10 is referred to as "SA-CA10". More specifically, SA-CA10 that is a difference obtained by subtracting the spark timing SA from the measured CA10 is referred to as a "measured SA-CA10". Note that, according to the present embodiment, a final target spark timing (command value of spark timing in the next cycle) after adjustment by feedback control of the spark timing utilizing CA50 as described later is used as the spark timing SA that is used for calculating the measured SA-CA10.

SA-CA10 is a parameter that represents an ignition delay, and there is a correlation between SA-CA10 and the air-fuel ratio. More specifically, in a lean air-fuel ratio range, there is a relation that SA-CA10 increases as the air-fuel ratio becomes leaner. Therefore, a target SA-CA10 that corresponds to a desired target air-fuel ratio can be determined by utilizing a predetermined relation between the air-fuel ratio and SA-CA10. In addition, according to the present embodiment a configuration is adopted so that, during lean-burn operation, feedback control is executed that adjusts a fuel injection amount so that the measured SA-CA10 comes close to the target SA-CA10 (hereunder, referred to simply as "SA-CA10 feedback control").

As shown in Fig. 3, in the SA-CA10 feedback control, the target SA-CA10 is set in accordance with the engine operating condition (more specifically, the target air-fuel ratio, the engine speed and the intake air flow rate). The measured SA-CA10 is calculated for each cycle in the respective cylinders. Further, in the SA-CA10 feedback control, as one example, PI control is used to adjust the fuel injection amount so that a difference between the target SA-CA10 and the measured SA-CA10 is eliminated. In the PI control, using a difference between the target SA-CA10 and the measured SA-CA10 as well as a predetermined PI gain (proportional gain and integral gain), a correction amount for the fuel injection amount is calculated in accordance with the size of the difference and the size of an integrated value thereof. A correction amount that is calculated for each cylinder is reflected in the basic fuel injection amount of the cylinder that is the object of adjustment. As a result, the fuel injection amount to be supplied in the next cycle at the cylinder is adjusted (corrected) by the SA-CA10 feedback control.

According to the SA-CA10 feedback control, in a cylinder in which a measured SA-CA10 that is less than the target SA-CA10 is obtained, correction is executed that decreases the fuel injection amount to be used in the next cycle to thereby make the air-fuel ratio leaner and increase the measured SA-CA10. Conversely, in a cylinder in which a measured SA-CA10 that is greater than the target SA-CA10 is obtained, correction is executed that increases the fuel injection amount to be used in the next cycle to thereby make the air-fuel ratio richer and decrease the measured SA-CA10.

According to the SA-CA10 feedback control, by utilizing SA-CA10 that is a parameter that has a high correlation with the air-fuel ratio, the air-fuel ratio during lean-burn operation can be controlled to a target value (target air-fuel ratio). Consequently, by setting the target SA-CA10 to a value corresponding to an air-fuel ratio in the vicinity of a lean combustion limit, the air-fuel ratio can be controlled in the vicinity of the lean limit. By this means, low fuel consumption and low NOx emissions can be realized.

2. Feedback Control of Spark Timing Utilizing CA50

The optimal spark timing (so-called "MBT (Minimum spark advance for the Best Torque) spark timing") changes according to the air-fuel ratio. Therefore, if the air-fuel ratio changes as a result of the SA-CA10 feedback control, the MBT spark timing will also change. On the other hand, CA50 at which the MBT spark timing is obtained substantially does not change with respect to the air-fuel ratio in the lean air-fuel ratio range. Therefore it can be said that, by adopting, as a target CA50, CA50 when the MBT spark timing is obtained, and correcting the spark timing so that a difference between the measured CA50 and the target CA50 is eliminated, the spark timing at a time of lean-burn operation can be adjusted to the MBT spark timing without being affected by the influence of a change in the air-fuel ratio. Therefore, according to the present embodiment a configuration is adopted that, during lean-burn operation, together with the SA-CA10 feedback control, also executes feedback control that adjusts the spark timing so that the measured CA50 comes close to the target CA50 (hereunder, referred to simply as "CA50 feedback control").

As shown in Fig. 3, in the CA50 feedback control, the target CA50 for making the spark timing the MBT spark timing is set to a value that is in accordance with the engine operating condition (more specifically, the target air-fuel ratio, the engine speed and the intake air flow rate). Note that, the term "CA50 feedback control" used herein is not necessarily limited to control that controls the spark timing so as to obtain the MBT spark timing. That is, the CA50 feedback control can also be used in an example where a spark timing other than the MBT spark timing is adopted as a target value, such as at so-called a time of retarded combustion. In such an example, for example, in addition to the above described engine operating condition, the target CA50 can be set so as to change in accordance with a target ignition efficiency (an index value indicating the degree of divergence of the target value from the MBT spark timing).

The measured CA50 is calculated for each cycle in the respective cylinders. Further, in the CA50 feedback control, as one example, PI control is used to correct the spark timing from the basic spark timing so that a difference between the target CA50 and the measured CA50 is eliminated. The basic spark timing is previously stored in the ECU 40 as a value that is in accordance with the engine operating condition (mainly, the intake air flow rate and the engine speed). In the PI control, using a difference between the target CA50 and the measured CA50 as well as a predetermined PI gain (proportional gain and integral gain), a correction amount of the spark timing is calculated that is in accordance with the size of the difference as well as the size of an integrated value of the difference. A correction amount that is calculated for each cylinder is reflected in the basic spark timing for the target cylinder. By this means, the spark timing (target spark timing) to be used in the next cycle at the cylinder is adjusted (corrected) by the CA50 feedback control.

[Method for Malfunction Detection, and Countermeasure at Time of Malfunction Detection according to First Embodiment]

(Influence that Noise Superimposed on In-cylinder Pressure Data Imparts to Engine Control)

Noise may be superimposed on an output signal of the in-cylinder pressure sensor 30 due to a variety of factors. If noise is superimposed on an output signal of the in-cylinder pressure sensor 30, noise is also superimposed on measured data of the heat release amount Q calculated based on the in-cylinder pressure, and further on measured data of MFB. As a result of this, an error due to noise may be included in CA10 and CA50 that are used for the SA-CA10 feedback control and the CA50 feedback control that are engine control according to the present embodiment. If engine control, such as the SA-CA10 feedback control and the CA50 feedback control is performed without giving any particular consideration to this kind of noise, there is a possibility that the accuracy of the engine control will deteriorate.

Fig. 4A and Fig. 4B are views for concretely describing the influence that noise superimposed on in-cylinder pressure data imparts to engine control. Firstly, Fig. 4A schematically illustrates a waveform of heat release amount data that is based on in-cylinder pressure data on which a large noise is superimposed in a spike shape in a crank angle period after a combustion period. The following problem arises when MFB data is calculated utilizing heat release amount data on which noise is superimposed in this manner. That is, there is a possibility that a value of the heat release amount data at the crank angle timing at which noise is superimposed will be erroneously recognized as a maximum heat release amount Qmax. This means that heat release amount data at which MFB reaches 100% will be erroneously determined. Consequently, an error will arise in calculation of CA100. Thus, an error caused by noise is liable to arise at CA100 and combustion points in the vicinity thereof due to receiving the influence of noise that is superimposed in a crank angle period after the combustion period. Although the influence of noise that is superimposed in the form described above decreases as the position of the combustion point is separated on the CA0 side from CA100, the noise causes an error to arise in the values of other combustion points also because the maximum heat release amount Qmax that serves as a basis for calculating MFB is erroneously determined. More specifically, as exemplified in Fig. 4A, an error also arises at combustion points (such as CA50) in the vicinity of the center of the combustion period, which are combustion points that, originally, it is difficult for the influence of noise to directly affect.

On the other hand, Fig. 4B schematically illustrates a waveform of MFB data that is based on in-cylinder pressure data on which a large noise is superimposed in a spike shape at a crank angle timing that is after the spark timing (SA) in a crank angle period before the combustion period. If it is assumed that a waveform of measured data of MFB acquired during execution of the above described SA-CA10 feedback control is this kind of waveform, there is a possibility that a crank angle in the vicinity of the data on which the spike-shaped noise is superimposed will be erroneously calculated as CA10.

If measured data for MFB is affected by the influence of noise as in the examples shown in Fig. 4A and Fig. 4B, an error may arise at specified fraction combustion points CAX, such as CA10 and CA50. Therefore, where engine control based on a specified fraction combustion point CAX is performed, it is required to be able to appropriately detect that noise is superimposed on measured data of MFB, and to take an appropriate countermeasure when noise is detected. More specifically, as will be understood from the aforementioned examples, when noise is superimposed during the crank angle period after the combustion period, many specified fraction combustion points are easy to be affected by the influence of the error as compared with when noise is superimposed during the crank angle period before the combustion period. Thus, the degree of influence of noise on engine control is larger when noise is superimposed during the crank angle period after the combustion period.

(Noise detection utilizing degree of correlation between measured data and reference data of MFB)

When various usage environments of the internal combustion engine 10 are assumed, it is difficult to ascertain in advance when and in what form noise that has an influence on engine control will be superimposed on an output signal of the in-cylinder pressure sensor 30. However, where the above described SA-CA10 feedback control and CA50 feedback control based on the output of the in-cylinder pressure sensor 30 are performed, it is required that it is possible to appropriately detect that measured data of MFB is affected by the influence of noise, and that an appropriate countermeasure is taken when noise is detected.

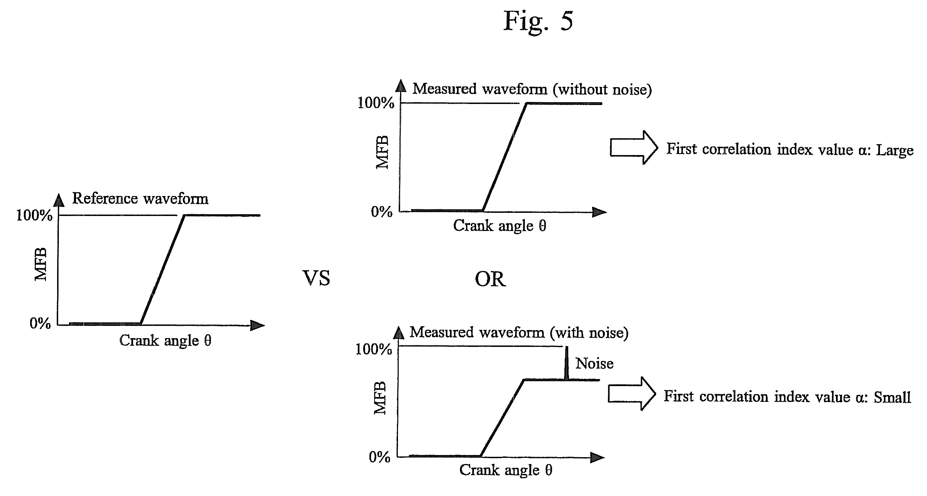

Fig. 5 is a view for describing a method for performing noise detection by determining the degree of correlation between reference data and measured data of MFB. A reference waveform shown in Fig. 5 is a waveform of reference data of MFB that is defined based on an engine operating condition. Measured waveforms shown in the same drawing are waveforms of measured data of MFB. More specifically, the measured waveform (without noise) schematically shows an example where noise is not superimposed, while the measured waveform (with noise) schematically shows an example where a spike-shaped noise is superimposed during a crank angle period after the combustion period (CA0 to CA100).

If measured data of MFB is affected by the influence of noise, the measured data differs from the reference data of MFB at the same operating condition, which is not affected by the influence of this kind of noise. Accordingly, in the present embodiment, in order to detect that measured data of MFB is affected by the influence of noise, the magnitude of a "first correlation index value $\alpha$" that indicates the degree of correlation between reference data and measured data of MFB is evaluated. In addition, according to the present embodiment, a cross-correlation function is used as one example of a method for calculating the first correlation index value $\alpha$. Calculation of a cross-correlation coefficient R using a cross-correlation function is performed using the following equation (4).

$$R = \sum f_{a \sim b}(\theta) g_{a \sim b}(\tau_\theta - \theta) \quad \cdots \quad (4)$$

Where, in the above equation (4), $\theta$ represents the crank angle. Further, $\tau_\theta$ is a variable that represents a relative deviation in a crank angle axis direction with respect to two waveforms that are objects for evaluation of the degree of correlation (in the present embodiment, waveforms for reference data and measured data of MFB). A function $f_{a \sim b}(\theta)$ corresponds to reference data of MFB that is a set of discrete values that exists for each predetermined crank angle. A function $g_{a\sim b}(\tau_\theta-\theta)$ corresponds to measured data of MFB that, likewise, is a set of discrete values. More specifically, $(a\sim b)$ indicates a period on the crank angle axis in which these functions $f_{a\sim b}(\theta)$ and $g_{a\sim b}(\tau_\theta)$ are respectively defined. The period $(a\sim b)$ corresponds to a crank angle period (hereunder, referred to as an "evaluation period T") in which reference data and measured data exist that are objects for calculation of the cross-correlation coefficient R (in other words, objects for evaluation of the degree of correlation) in the reference data and measured data of MFB. Although concrete examples of the evaluation period T will be described later, a period from a spark timing (SA) to an opening timing of the exhaust valve 22 (EVO) can be, for example, used as the evaluation period T. The evaluation period T may be a period identified utilizing any one of reference data and measured data. Note that, in an example where measured values of the specified fraction combustion points CAX (in the present embodiment, CA10 and CA50) that are used in the engine control are not included in the measured data of MFB that is calculated based on measured data of the in-cylinder pressure, a configuration may be adopted in which such a measured value is acquired by interpolation based on adjacent measured data, and a value on the reference data side that serves as a counterpart in a pair with the measured value is acquired, and the pair of values are included in the objects for evaluating the degree of correlation.

Performance of a convolution operation using equation (4) is accompanied by an operation that, by varying the variable $\tau_\theta$ within a predetermined range, consecutively calculates the cross-correlation coefficient R while causing the entire waveform of the measured data of MFB within the evaluation period T to move little by little in the crank angle direction (horizontal axis direction in Fig. 5) while keeping the waveform of the reference data fixed. A maximum value $R_{max}$ of the cross-correlation coefficient R in the course of this operation corresponds to the cross-correlation coefficient R when two waveforms are closest to each other overall, and can be expressed as shown in the following equation (5). In addition, the first correlation index value $\alpha$ used in the present embodiment is not the maximum value $R_{max}$ itself, but rather is a value obtained by performing predetermined normalization processing on the cross-correlation coefficient R. The term "normalization processing" used here refers to processing that is defined so that $R_{max}$ shows a value of 1 when the two waveforms (reference data waveform and measured data waveform) are completely matching, and since this processing itself is known, a detailed description thereof is omitted here.

$$R_{\max} = \max(R) = \max\left(\sum f_{a\sim b}(\theta)g_{a\sim b}(\tau_\theta-\theta)\right) \quad \cdots \quad (5)$$

The first correlation index value $\alpha$ calculated by the aforementioned calculation processing becomes 1 (maximum) in an example where the two waveforms completely match, and progressively approaches zero as the degree of correlation between the two waveforms decreases. Note that, in an example where the first correlation index value $\alpha$ exhibits a negative value, there is a negative correlation between the two waveforms, and the first correlation index value $\alpha$ exhibits a value of -1 in an example where the two waveforms are completely inverted. Accordingly, the degree of correlation between reference data and measured data of MFB can be ascertained on the basis of the first correlation index value $\alpha$ that is obtained as described above.

In the example illustrated in Fig. 5, the first correlation index value $\alpha$ becomes a large value (a value close to 1) in a measured waveform (without noise). On the other hand, in a measured waveform (with noise) on which a spike-shaped noise is superimposed at a single location, the first correlation index value $\alpha$ becomes a small value relative to the value in the measured waveform (without noise). Further, the first correlation index value $\alpha$ decreases as the magnitude of noise that is superimposed increases.

Note that, although according to the present embodiment a configuration is adopted in which, as described above, the maximum value of a value obtained by normalizing the cross-correlation coefficient R is used as the first correlation index value $\alpha$, a "correlation index value" according to the present disclosure may also be the maximum value $R_{max}$ itself of the cross-correlation coefficient R that is not accompanied by predetermined normalization processing. This also applies with respect to second to fourth correlation index values $\beta$, $\gamma$ and $\delta$ that are described later. However, the correlation index value (that is, the maximum value $R_{max}$) in an example that is not accompanied by normalization processing does not simply increase as the degree of correlation increases, but rather the relation described hereunder exists between the size of the maximum value $R_{max}$ and increases/decreases in the degree of correlation. That is, the degree of correlation increases as the maximum value $R_{max}$ increases, and the degree of correlation becomes highest (that is, the two waveforms completely match) when the maximum value $R_{max}$ equals a certain value Y. Further, when the maximum value $R_{max}$ increases to a value greater than the value Y, the degree of correlation decreases with an increase in the maximum value $R_{max}$. Accordingly, in the example of using the maximum value $R_{max}$ as it is as the "correlation index value" without normalization processing, a determination as to whether or not the "correlation index value" is less than a "determination value" can be performed by the following processing. That is, when the maximum value $R_{max}$ deviates from within a predetermined range that is centered on the value Y, it can be determined that "the correlation index value is less than the determination value" and, conversely, when the maximum value $R_{max}$ falls within the aforementioned predetermined range, it can be determined that "the correlation index value is greater than or equal to the determination value".

(Discrimination between influence of noise on measured data of MFB and influence of thermal strain thereon)

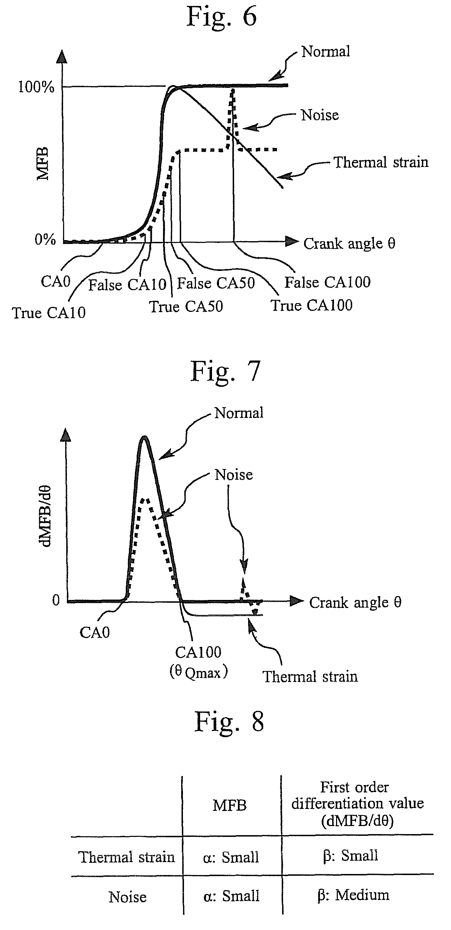

Fig. 6 is a view for representing the influence of noise on measured data of MFB and the influence of thermal strain thereon. A waveform shown by attaching "Normal" in Fig. 6 represents a waveform of measured data of MFB which is not affected by the influence of any of noise and thermal strain (which corresponds to a waveform of reference data).

Measured data of MFB is affected by not only the influence of noise as described above, but also the influence of thermal strain of the in-cylinder pressure sensor 30. The thermal strain mentioned here is a phenomenon in which a sensor the tip part exposed inside the cylinder deforms due to a high temperature combustion gas. If this kind of thermal strain arises, in-cylinder pressure detected by the in-cylinder pressure sensor 30 may include an error due to the thermal strain (thermal strain error).

The thermal strain error affects a heat release rate $dQ/d\theta$ calculated by the aforementioned equation (1), and, as a result, also affects measured data of heat release amount Q and measured data of MFB that are calculated by the aforementioned equations (2) and (3), respectively. More specifically, as the thermal strain error increases, measured data of MFB is largely affected by the influence of the thermal strain. A thermal strain error due to combustion at a certain combustion cycle affects the measured data of MFB during a crank angle period after the combustion period of the certain combustion cycle (that is, the measured data of MFB after a crank angle (heat release amount maximum crank angle $\theta_{max}$) at which the heat release amount Q reaches the maximum heat release amount Qmax). Note that a waveform of measured data of MFB shown by attaching "Thermal strain" in Fig. 6 represents one example of a waveform which includes a thermal strain error in a manner that a value in the measured data decreases as the crank angle $\theta$ progresses. In contrast to this example, a thermal strain error may be included in a crank angle period after $\theta_{Qmax}$ in a manner that a value in the measured data increases as the crank angle $\theta$ progresses.

Because the degree of correlation between measured data and reference data of MFB decreases due to the influence of a thermal strain error, the first correlation index value $\alpha$ decreases due to not only the influence of noise but also the influence of the thermal strain error. Therefore, when it is assumed that a thermal strain error arises, it is difficult to determine whether the reason why the first correlation index value $\alpha$ is small is the influence of noise or the influence of thermal strain only by simply evaluating the magnitude of the first correlation index value $\alpha$ relating to MFB data. Thus, it becomes difficult to accurately determine that the measured data of MFB is affected by the influence of noise.

It is assumed herein that the degree of decrease in the first correlation index value $\alpha$ in each of the measured waveform (noise) and the measured waveform (thermal strain) shown in Fig. 6 is the same level. As already described with reference to Fig. 4A and Fig. 4B and will be understood from Fig. 6, in an example where noise arises during a crank angle period after $\theta_{Qmax}$, a relatively large deviation is produced in both of CA50 and CA10 due to an erroneous detection of data of the heat release amount Q at which MFB reaches 100% (maximum heat release amount Qmax). On the other hand, in the waveform affected by the influence of thermal strain, data during the combustion period is sufficiently close to that of the normal waveform as seen from Fig. 6. Thus, the influence of thermal strain on CA50 and CA10 is lower than the influence of noise. It can therefore be said that the influence on engine control utilizing a specified fraction combustion point CAX is larger in measured waveform affected by the influence of noise than in measured waveform affected by the influence of thermal strain, even if the degree of decrease in the first correlation index value $\alpha$ is the same level. Accordingly, if the influence of noise and influence of thermal strain on measured data of MFB cannot be properly discriminated, a change in measured data of MFB due to the influence of noise becomes difficult to be accurately ascertained, and, as a result, there is a possibility that appropriately measures against noise becomes difficult to be taken.

Fig. 7 is a view for representing the influence of noise and influence of thermal strain on measured data of $dMFB/d\theta$. Measured data of $dMFB/d\theta$ herein is first order differentiation data obtained by differentiating measured data of MFB with respect to the crank angle $\theta$. In addition, a waveform shown by attaching "Normal" in Fig. 7 represents a waveform of measured data of $dMFB/d\theta$ which is not affected by the influence of any of noise and thermal strain, which corresponds to a waveform of reference data of $dMFB/d\theta$.

As shown in Fig. 7, in comparing the waveforms of measured data of $dMFB/d\theta$, the waveform of measured data that includes a spike-shaped noise is sufficiently correlated to the normal waveform (reference waveform) shown by a thick solid line except for an extremely short period in which noise arises. On the other hand, the waveform of measured data of $dMFB/d\theta$ that includes a thermal strain error is still detached from the normal waveform (reference waveform) even after differentiating the measured data of MFB. More specifically, in an example in which a thermal strain error is produced in a manner shown in Fig. 6, the influence of the thermal strain error on measured data of $dMFB/d\theta$ appears in a manner that measured data of $dMFB/d\theta$ is detached from the normal waveform on the negative side in a crank angle period after $\theta_{Qmax}$. Note that, although it is not shown in the drawings, in an example in which a thermal strain error arises in a manner that values of measured data of MFB increase as the crank angle $\theta$ progresses

in a crank angle period after $\theta_{Qmax}$, the influence of the thermal strain error on measured data of MFB/d$\theta$ appears in a manner that measured data of dMFB/d$\theta$ is detached from the normal waveform on the positive side in the crank angle period after $\theta_{Qmax}$.

Furthermore, with regard to the combustion period (CA0-CA100), a waveform of measured data of dMFB/d$\theta$ on which noise is superimposed in a crank angle period after $\theta_{Qmax}$ takes over the influence that measured data of MFB is largely detached from the normal data as shown in Fig. 6, and is largely detached from the normal waveform as shown in Fig. 7.

In view of the above described points, it can be said that, if the degree of correlation between measured data and reference data of dMFB/d$\theta$ is evaluated except for the combustion period (CA0-CA100), discrimination between an example of being affected by the influence of noise and an example of being affected by the influence of thermal strain can be made. In this respect, description will be made hereunder with reference to Fig. 8.

Fig. 8 is a diagram that collectively shows the relation between the influences of noise and thermal strain, and the magnitude of the correlation index values $\alpha$, P of the respective measured data of MFB and its differentiation value dMFB/d$\theta$. A correlation index value that indicates the degree of correlation between measured data and reference data of dMFB/d$\theta$ is referred to as a "second correlation index value $\beta$". Calculation of the second correlation index value P can be performed using the same method as the above described calculation of the first correlation index value $\alpha$. As one example, an evaluation period T2 for the second correlation index value $\beta$ is a crank angle period from $\theta_{Qmax}$ (CA100) to an opening timing of the exhaust valve 22 (EVO) and a crank angle period from a spark timing (SA) to a combustion start point (CA0). The first correlation index value $\alpha$ for MFB becomes smaller due to any of the influences of noise and thermal strain, as already described with reference to Fig. 6.

On the other hand, the second correlation index value P for dMFB/d$\theta$ in an example of being affected by the influence of noise becomes greater than an example of being affected by the influence of thermal strain, as already described with reference to Fig. 7. Therefore, by properly setting in advance a second determination value $\beta_{th}$ (positive value) as a value for discriminating a second correlation index value $\beta$ that is obtained in an example of being affected by the influence of noise from a second correlation index value P that is obtained in an example of being affected by the influence of thermal strain, the example of being affected by the influence of noise can be properly discriminated from the example of being affected by the influence of thermal strain based on a comparison result between the second correlation index value $\beta$ and the second correlation index value $\beta_{th}$.

(Detection and countermeasures for noise)

If the SA-CA10 feedback control and the CA50 feedback control are continued without change irrespective of a fact that the two types of feedback control are being performed under a situation in which noise is superimposed on measured data of MFB, there is a possibility that high-accuracy feedback control cannot be performed. Accordingly, it is determined in the present embodiment that, when the first correlation index value $\alpha$ for MFB is less than the first correlation index value $\alpha_{th1}$ and the second correlation index value $\beta$ for dMFB/d$\theta$ is greater than or equal to a second determination value $\beta_{th}$, measured data of MFB is affected by the influence of a spike-shaped noise.

Further, when the result of the aforementioned determination is affirmative, the SA-CA10 feedback control and the CA50 feedback control are suspended. Reflection, in the SA-CA10 feedback control and the CA50 feedback control, of the measured CA10 and the measured CA50, respectively, in the combustion cycle in which the first correlation index value $\alpha$ and the second correlation index value $\beta$ that are the object of the affirmative determination are calculated is thereby suspended. On the other hand, when the first correlation index value $\alpha$ is less than the first correlation index value $\alpha_{th1}$ and the second correlation index value $\beta$ is less than the second determination value $\beta_{th}$ (that is, in an example of being affected by the influence of thermal strain), it is determined in the present embodiment that the influence of thermal strain on CA10 and CA50 is small, and suspending the SA-CA10 feedback control and the CA50 feedback control is not performed.

Moreover, it is conceivable that, when a spike-shaped and large noise is superimposed on measured data of MFB, malfunction arises at an electric circuit (not shown in the drawings) of the in-cylinder pressure sensor 30. Accordingly, it is determined in the present embodiment that, when the first correlation index value $\alpha$ for MFB is less than the first correlation index value $\alpha_{th1}$ and the second correlation index value P for dMFB/d$\theta$ is greater than or equal to the second determination value $\beta_{th}$, malfunction arises at the electric circuit of the in-cylinder pressure sensor 30, and the MIL 46 is turned on. Note that, for example, disconnection of a shield wire of the in-cylinder pressure sensor 30 corresponds to malfunction of the electric circuit mentioned here.

(Specific processing in first embodiment)

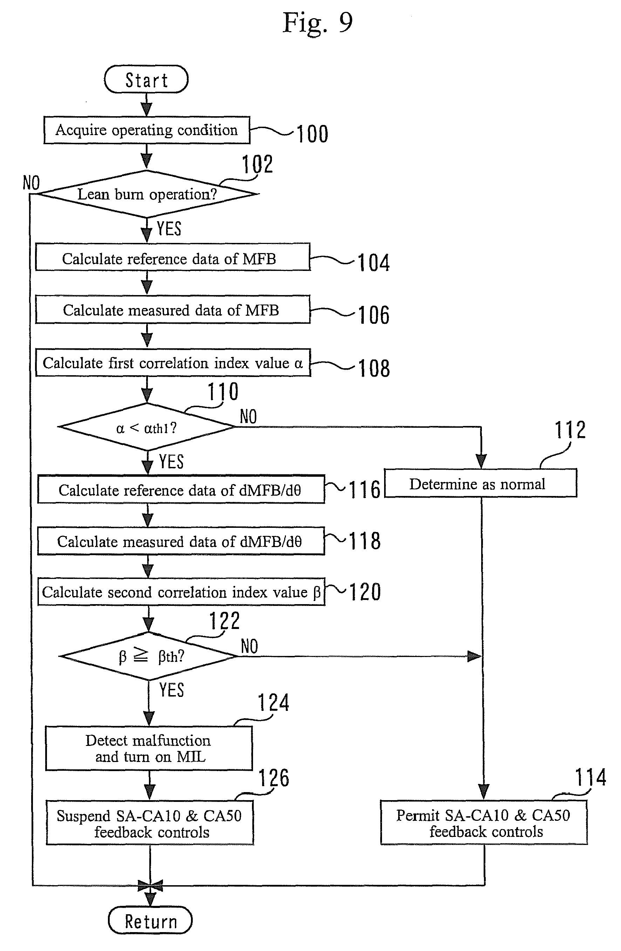

Fig. 9 is a flowchart illustrating a routine that the ECU 40 executes in the first embodiment of the present disclosure. Note that the present routine is started at a timing at which the opening timing of the exhaust valve 22 has passed in each cylinder, and is repeatedly executed for each combustion cycle.

In the routine shown in Fig. 9, first, in step 100, the ECU 40 acquires the current engine operating condition. The term "engine operating condition" used here refers to mainly the engine speed, the intake air flow rate, the air-fuel ratio and the spark timing. The engine speed is calculated using the crank angle sensor 42. The intake air flow rate is calculated using the air flow sensor 44. The air-fuel ratio is a target air-fuel ratio, and can be calculated from a map that defines the target air-fuel ratio based on the engine torque and the engine speed. The target air-fuel ratio is either one of a certain lean air-fuel ratio used at a time of lean burn operation and the stoichiometric air-fuel ratio. The spark timing is a command value of a spark timing used in the current combustion cycle (that is, a target spark timing). At a time of operation using the stoichiometric air-fuel ratio, the target spark timing is determined using the intake air flow rate and engine speed as main parameters, while, at a time of lean burn operation, a value in which the CA50 feedback control has been reflected is used as the target spark timing. Note that a target engine torque calculated based on an accelerator position detected by an accelerator position sensor (not shown in the drawings) of the vehicle can, for example, be used as the engine torque.

Next, the ECU 40 proceeds to step 102 and determines whether or not the current operating region is a lean burn operating region. Specifically, it is determined whether the current operating region is a lean burn operating region or an operation region using the stoichiometric air-fuel ratio, based on the target air-fuel ratio acquired in step 100.

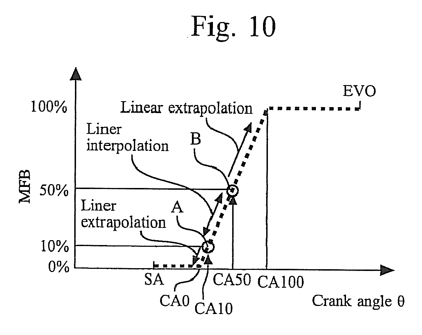

When the determination results of step 102 is negative, the current processing of the routine is promptly ended. When, on the other hand, the determination results of step 102 is affirmative, the ECU 40 proceeds to step 104. In step 104, based on the engine operating condition acquired in step 100, reference data of MFB is calculated for the evaluation period T1. The evaluation period T1 is, as one example, from a spark timing (SA) to an opening timing of the exhaust valve 22 (EVO). As one example, the reference data of MFB can be calculated using a method described hereunder with reference to Fig. 10.

Fig. 10 is a view for describing one example of a method for creating reference data of MFB. Fig. 10 represents an xy-plane (hereunder, referred to as an "MFB-$\theta$ plane") that takes the crank angle $\theta$ as an x-coordinate value and the mass fraction burned MFB as a $\gamma$-coordinate value.

As already described above with reference to Fig. 3, the target CA50 that is the target value for the CA50 feedback control is determined as a value that is in accordance with the engine operating condition (target air-fuel ratio, engine speed and intake air flow rate). The target SA-CA10 that is the target value of the SA-CA10 feedback control is likewise determined as a value that is in accordance with the engine operating condition. In lean burn operation in which the CA50 feedback control is executed, a command value (target spark timing) of the spark timing (SA) in each combustion cycle is determined as a value which is based on the basic spark timing according to the engine operating condition and in which the CA50 feedback control has been reflected. The value of CA10 can be calculated based on the target SA-CA10 and the target spark timing that are calculated in this manner. However, since this CA10 itself is not a direct control target value of the SA-CA10 feedback control, hereunder, the CA10 is referred to as a "specified CA10".

CA50 is a crank angle at which MFB reaches 50%, and CA10 is a crank angle at which MFB reaches 10%. Consequently, if the value of the target CA50 and the value of the specified CA10 are determined, a point A and a point B at which the target CA50 and the specified CA10 are located, respectively, on the MFB-$\theta$ plane shown in Fig. 10 are naturally determined.

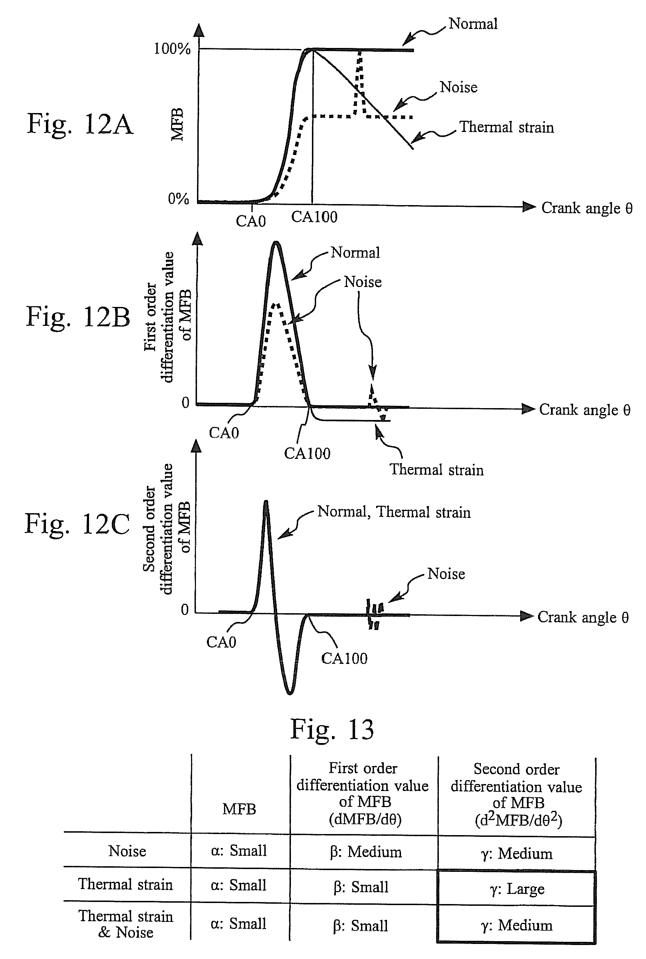

In order to evaluate the degree of correlation of measured data of MFB, it is necessary for the reference data to have, without omission, data that serves as a pair for each data item of the measured data that is acquired for each predetermined crank angle. To achieve this, according to the present method, linear interpolation and linear extrapolation are performed based on the two points A and B, and reference data of MFB is thereby generated within a crank angle period from a combustion start point CA0 to a combustion end point CA100. Further, reference data for a crank angle period prior to CA0 is generated using data in which MFB is 0%, and reference data for a crank angle period after CA100 is generated using data in which MFB is 100%. Reference data of MFB in step 104 is generated in this manner. A waveform which the generated reference data traces is a waveform as illustrated by a broken line in Fig. 13. According to the present method that utilizes a direct or indirect control target value (target CA50 and specified CA10) in engine control based on a specified fraction combustion point CAX, reference data of MFB can be generated simply and accurately while grasping the characteristics of waveform of data of MFB. Note that, where the ECU40 proceeds to present step 104 to calculate reference data in a state in which the SA-CA10 feedback control and CA50 feedback control are suspended by the processing of step 126 described later, values of the target CA50 and specified CA10 that are immediately before the suspension can be used.

Next, the ECU 40 proceeds to step 106. In step 106, measured data of MFB is calculated in accordance with the above described equation (3) based on measured data of the in-cylinder pressure that is acquired using the in-cylinder pressure sensor 30 in the current combustion cycle.

Next, the ECU 40 proceeds to step 108. In step 108, with the reference data and the measured data of MFB that are calculated in steps 104 and 106, respectively, the first correlation index value $\alpha$ is calculated using the aforementioned equation (5) by taking as an object the evaluation period T1.

Next, the ECU 40 proceeds to step 110. In step 110, the ECU 40 determines whether or not the first correlation index value $\alpha$ is less than a predetermined first determination value $\alpha_{th1}$. The first determination value $\alpha_{th1}$ used in present step 110 is set in advance as a value for determining that noise, the magnitude of which is larger than or equal to that of noise which affects the SA-CA10 feedback control and the CA50 feedback control, has been superimposed.

If the determination results of step 110 is negative ($\alpha \geq \alpha_{th1}$), that is, if it can be determined that the degree of correlation between the measured data of MFB of the current combustion cycle and the reference data thereof at the same operating condition is high, the ECU 40 proceeds to step 112 and determines that the measured data of MFB of the current combustion cycle is normal. Next, the ECU 40 proceeds to step 114 and permits the continuance of the SA-CA10 feedback control and CA50 feedback control.

If, on the other hand, the determination results of step 110 is affirmative ($\alpha < < \alpha_{th1}$), that is, if it can be determined that the degree of correlation between the measured data of MFB and the reference data thereof is low, the ECU 40 proceeds to step 116. In step 116, by differentiating the reference data of MFB calculated in step 104 with respect to the crank angle $\theta$, reference data of dMFB/d$\theta$ (reference first order differentiation data of MFB) is calculated by taking as an object the aforementioned evaluation period T2.

Next, the ECU 40 proceeds to step 118. In step 118, by differentiating the measured data of MFB calculated in step 106 with respect to the crank angle $\theta$, measured data of dMFB/d$\theta$ (measured first order differentiation data of MFB) is calculated.

Next, the ECU 40 proceeds to step 120. In step 120, with the reference data and the measured data of dMFB/d$\theta$ that are calculated in steps 116 and 118, respectively, the second correlation index value $\beta$ is calculated using the aforementioned equation (5) by taking as an object the evaluation period T2.

Next, the ECU 40 proceeds to step 122. In step 122, the ECU 40 determines whether or not the second correlation index value $\beta$ calculated in step 120 is greater than or equal to a predetermined second determination value $\beta_{th}$. As described above, the second determination value $\beta_{th}$ used in present step 122 is set in advance as a value for discriminating a second correlation index value $\beta$ that is obtained in an example of being affected by the influence of noise from a second correlation index value $\beta$ that is obtained in an example of being affected by the influence of thermal strain.

If the determination results of step 122 is negative ($\beta < \beta_{th}$), that is, if it can be determined that the reason of a decrease in the degree of correlation of the measured data of MFB is a thermal strain error, the ECU 40 proceeds to step 114 and permits the continuance of the SA-CA10 feedback control and CA50 feedback control.

If, on the other hand, the determination results of step 122 is affirmative ($\beta \geq \beta_{th}$), that is, if it can be determined that the reason of a decrease in the degree of correlation of the measured data of MFB is a spike-shaped noise, the ECU 40 proceeds to step 124. In step 124, the ECU 40 determines that malfunction, such as disconnection of a shield wire, arises at the electric circuit of the in-cylinder pressure sensor 30, and executes the processing to turn on the MIL 46. The ECU 40 then proceeds to step 126. In step 126, the ECU 40 suspends the SA-CA10 feedback control and the CA50 feedback control.

In the present embodiment, the SA-CA10 feedback control and CA50 feedback control are executed per cylinder during lean-burn operation, the results of these feedback controls (that is, a correction amount that is based on the feedback control) is reflected in the next combustion cycle of the same cylinder. The processing in present step 126 is, more specifically, processing to stop these feedback controls by maintaining a correction amount for the fuel injection amount that is based on the SA-CA10 feedback control and a correction amount for the spark timing that is based on the CA50 feedback control at the previous values thereof, respectively (more specifically, values calculated in the previous combustion cycle), and not reflecting, in the respective correction amounts, the measured CA10 and the measured CA50 calculated in the current combustion cycle. Note that, PI control is utilized as an example of the aforementioned feedback control performed as described with reference to Fig. 3. That is, an I-term (integral term) that utilizes a cumulative difference between a target vale (target SA-CA10 or the like) and a measured value (measured SA-CA10 or the like) is included in these feedback controls. Accordingly, in an example of utilizing the aforementioned difference in a past combustion cycle in order to calculate an I-term when resuming feedback control, it is desirable to ensure that a value in a combustion cycle in which noise is detected is not included.

According to the above described processing of the routine shown in Fig. 9, the degree of correlation between measured data and reference data is evaluated utilizing not only the first correlation index value $\alpha$ that is calculated by taking as an object the reference data and the measured data of MFB at the same operating condition, but also the second correlation index value $\beta$ for dMFB/d$\theta$ that is a first order differentiation value of MFB. This makes it possible to determine an example in which measured data of MFB is affected by the influence of a spike-shaped noise while being distinguished from an example of being affected by the influence of thermal strain. Further, in an example of being affected by the influence of noise, feedback controls that utilize the measured data of MFB (that is, SA-CA10 feedback control and CA50 feedback control) are suspended. By this means, a measured CA10 or a measured CA50 in the current combustion cycle with respect to which there is a possibility that an error has arisen due to noise are suspended from being reflected in the respective feedback controls. It is thereby possible to avoid a situation in which the accuracy of engine control deteriorates due to utilization of the aforementioned measured CA10 or measured CA50. As a result, the robustness of the engine control can be improved.

In addition, according to the processing of the routine, when detecting the influence of a spike-shaped noise by utilizing the first and second correlation index values $\alpha$ and $\beta$, the MIL 46 is turned on. Thus, malfunction of the electric circuit of the in-cylinder pressure sensor 30 can be notified to the driver of the vehicle.

In the above described first embodiment, when it is determined in a certain combustion cycle that the first correlation index value $\alpha$ for MFB is less than the first correlation index value $\alpha_{th1}$ and the second correlation index value $\beta$ for dMFB/d$\theta$ is greater than or equal to the second determination value $\beta_{th}$, the occurrence of malfunction of the electric circuit of the in-cylinder pressure sensor 30 is determined and the MIL 46 is turned on. However, this kind of malfunction determination on the in-cylinder pressure sensor 30 may be performed such that a provisional determination on malfunction is made in each combustion cycle each time the first correlation index value $\alpha$ for MFB is less than the first correlation index value $\alpha_{th1}$ and the second correlation index value P for dMFB/d$\theta$ is greater than or equal to the second determination value $\beta_{th}$. The malfunction determination may be then performed that the determination that malfunction arises at the electric circuit of the in-cylinder pressure sensor 30 is finalized when the number (number of combustion cycles) of provisional determinations becomes greater than or equal to a predetermined number. Further, a configuration may be adopted such that, when such a final determination has been made, the MIL 46 is turned on and the SA-CA10 feedback control and the CA50 feedback control are suspended. By performing this kind of processing, malfunction of the electric circuit of the in-cylinder pressure sensor 30 can be determined more accurately while being distinguished from an example on which a spike-shaped noise is superimposed by an incidental factor. Note that the above described processing that malfunction determination is finalized when the number of provisional determinations becomes larger than or equal to a predetermined number also applies with respect to other malfunction determinations in second to fourth embodiments described later.

Note that, in the above described first embodiment, the "mass fraction burned calculation means" according to the present disclosure is realized by the ECU 40 executing the processing in step 106; the "control means" according to the present disclosure is realized by the ECU 40 executing the SA-CA10 feedback control and the CA50 feedback control and executing the processing in step 126 when the determination results of both steps 110 and 122 are affirmative; the "first correlation index value calculation means" according to the present disclosure is realized by the ECU 40 executing the processing in step 108; and the "second correlation index value calculation means" according to the present disclosure is realized by the ECU 40 executing the processing in step 120. In addition, the fuel injection valve 26 and the ignition device 28 correspond to the "actuator" according to the present disclosure.

Second Embodiment

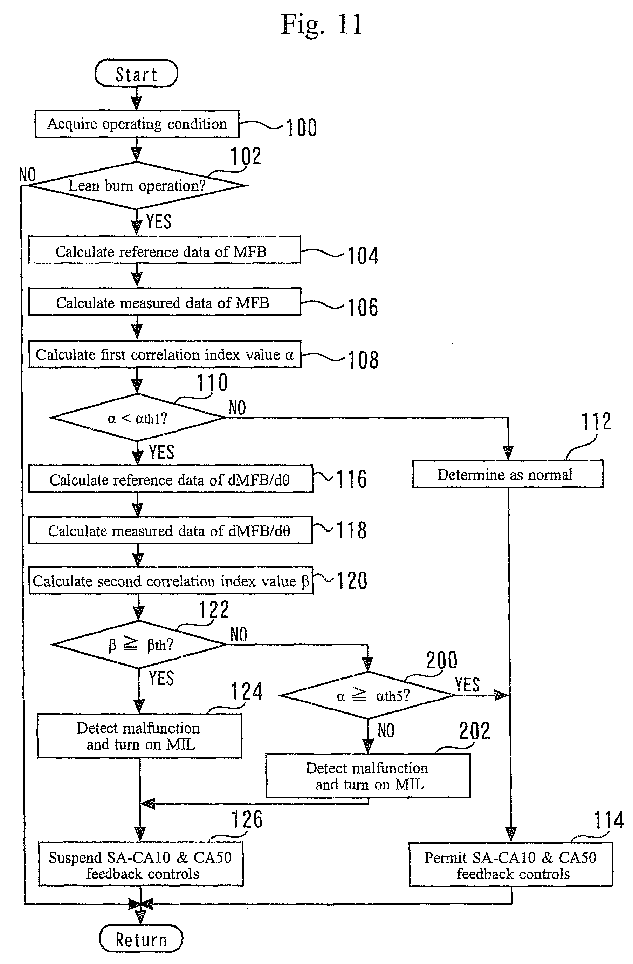

Next, a second embodiment of the present disclosure will be described with reference to Fig. 11.

[Method for Malfunction Detection, and Countermeasure at Time of Malfunction Detection according to Second Embodiment]

In the above described first embodiment, it is determined that, when the first correlation index value $\alpha$ is less than the first correlation index value $\alpha_{th1}$ and the second correlation index value $\beta$ is less than the second determination value $\beta_{th}$, the influence of thermal strain on CA10 and CA50 is small, and suspending the SA-CA10 feedback control and the CA50 feedback control is not performed.

In general, between an in-cylinder pressure sensor and a wall surface of a combustion chamber that surrounds the sensor, a seal part (not shown in the drawings) is provided that seals a gap between the in-cylinder pressure sensor and the aforementioned wall surface so that gas inside the cylinder does not pass through the gap to leak outside. If sealing function of this kind of the seal part declines, a high temperature combustion gas enters into a part on the inner side relative to the seal part. As a result, the amount of heat that the sensor tip part for sensing in-cylinder pressure receives from combustion gas increases. Because of this, if sealing function of the seal part declines (that is, if malfunction arises at the seal part), a thermal strain error increases. If a thermal strain error excessively increases due to malfunction of the seal part, the influence of thermal strain on CA10 and CA50 becomes too large to ignore. Therefore, the influence of thermal strain on the SA-CA10 feedback control and the CA50 feedback control increases.

Accordingly, in the present embodiment, when the first correlation index value $\alpha$ is less than the first correlation index value $\alpha_{th1}$ and the second correlation index value P is less than the second determination value $\beta_{th}$, it is further determined whether or not the first correlation index value $\alpha$ is greater than or equal to a fifth determination value $\alpha_{th5}$ that is less than the first correlation index value $\alpha_{th1}$

When the first correlation index value $\alpha$ is greater than or equal to the fifth determination value $\alpha_{th5}$ ($\alpha_{th5} \leq \alpha < \alpha_{th1}$), it can be judged that the degree of a decrease in the correlation of MFB data due to the influence of thermal strain is relatively low, because although the first correlation index value $\alpha$ is less than the first correlation index value

$\alpha_{th1}$, the first correlation index value $\alpha$ is greater than or equal to the fifth determination value $\alpha_{th5}$.

On the other hand, when the first correlation index value $\alpha$ is less than the fifth determination value $\alpha_{th5}$ ($\alpha < \alpha_{th5} < \alpha_{th1}$), it can be judged that the degree of a decrease in the correlation of MFB data due to the influence of thermal strain is relatively high, because the first correlation index value $\alpha$ is less than the fifth determination value $\alpha_{th5}$. Therefore, it is determined in the present embodiment that malfunction arises at the seal part. Further, the MIL 46 is turned on to notify the driver of the malfunction of the seal part, and the SA-CA10 feedback control and the CA50 feedback control are suspended.

(Specific processing in second embodiment)

Fig. 11 is a flowchart illustrating a routine that the ECU 40 executes in the second embodiment of the present disclosure. Note that, in Fig. 11, steps that are the same as steps shown in Fig. 9 in the first embodiment are denoted by the same reference numerals, and a description of those steps is omitted or simplified.

In the routine shown in Fig. 11, the ECU 40 proceeds to step 200 after determining in step 122 that the second correlation index value P is less than the second determination value $\beta_{th}$. In step 200, the ECU 40 determines whether or not the first correlation index value $\alpha$ is greater than or equal to the fifth determination value $\alpha_{th5}$. The fifth determination value $\alpha_{th5}$ is set in advance as a value for determining whether or not a decline in the correlation of MFB data that is caused by the influence of thermal strain is large due to malfunction of the seal part.

After determining in step 200 that the first correlation index value $\alpha$ is greater than or equal to the fifth determination value $\alpha_{th5}$, the ECU 40 proceeds to step 114 to permit execution of the SA-CA10 feedback control and the CA50 feedback control. On the other hand, after determining in step 200 that the first correlation index value $\alpha$ is less than the fifth determination value $\alpha_{th5}$, the ECU 40 proceeds to step 202 to determine that malfunction arises in sealing function of the seal part and turn on the MIL 46. The ECU 40 then proceeds to step 126 and suspends the SA-CA10 feedback control and the CA50 feedback control.

According to the above described processing of the routine shown in Fig. 11 that utilizes the first correlation index value $\alpha$ and the second correlation index value $\beta$, the measured data of MFB can be determined to be affected by the influence of a spike-shaped noise while distinguishing this from an example of being affected by the influence of thermal strain, and, in addition to this, the presence or absence of malfunction of the seal part can be determined. Further, when it is determined that malfunction of the seal part has occurred, appropriate countermeasures (that is, suspension of the SA-CA10 feedback control and CA50 feedback control) can be performed.

Third Embodiment

Next, a third embodiment of the present disclosure will be described with reference to Fig. 12A to Fig. 14.

[Method for Malfunction Detection, and Countermeasure at Time of Malfunction Detection according to Third Embodiment]

Fig. 12A to Fig. 12C are views for explaining the characteristics of waveforms of data of a second order differentiation value of MFB ($d^2MFB/d\theta^2$) while comparing them with waveforms of data of MFB and $dMFB/d\theta$. Note that CA0 and CA100 shown in Fig. 12A to Fig. 12C are of normal waveforms. In the above described first and second embodiments, by utilizing the second correlation index value $\beta$ relating to a waveform (Fig. 12B) of data of $dMFB/d\theta$ (first order differentiation value for MFB) as well as the first correlation index value $\alpha$ relating to a waveform (Fig. 12A) of data of MFB, measured data of MFB can be determined to be affected by the influence of a spike-shaped noise while distinguishing this from an example of being affected by the influence of thermal strain.

Here, there is a possibility that measured data of MFB is simultaneously affected by the influence of both of thermal strain and noise. The second correlation index value P decreases also in an example of being affected by the influence of both of thermal strain and noise. Therefore, it can be said that, only by evaluating the magnitude of the second correlation index value $\beta$, discrimination between an example of being affected by the influence of thermal strain alone and an example of being affected by the influence of both of thermal strain and noise is difficult to be performed. In addition to this, it can be said that the determination with regard to a spike-shaped noise which can be performed using the second correlation index value $\beta$ is not a determination as to whether or not measured data of MFB is affected by the influence of noise, but is a determination on distinguishing an example of being affected by the influence of noise alone from an example of being affected by the influence of thermal strain irrespective of the influence of noise.

Next, Fig. 12C represents waveforms of data of a second order differentiation value of MFB ($d^2MFB/d\theta^2$). When measured data of MFB is affected by the influence of thermal strain, the waveform of data of $dMFB/d\theta$ indicates a substantially constant value in a crank angle period after $\theta_{Qmax}$, as shown in Fig. 12B. Thus, a second order differentiation value of MFB in the aforementioned crank angle period indicates nearly zero. Therefore, according to the second order differentiation value of MFB, it is found that, as shown in Fig. 12C, the influence of thermal strain can be minimized.

On the other hand, in an example of being affected by the influence of a spike-shaped noise, the influence of noise on a second order differentiation value in the crank angle period after $\theta_{Qmax}$ becomes relatively greater than a case of being affected by the influence of thermal strain, as shown in Fig. 12C.

Fig. 13 is a diagram that collectively shows the relation between the influences of noise and thermal strain, and the magnitude of the correlation index values $\alpha$, $\beta$ and $\gamma$. A correlation index value that indicates the degree of correlation between measured data and reference data of $d^2MFB/d\theta^2$ is referred to as a "third correlation index value $\gamma$". Calculation of the third correlation index value $\gamma$ can be performed using the same method as the above described calculation of the first correlation index value $\alpha$ and the like. As one example, the evaluation period T2 is herein used as an evaluation period for the third correlation index value $\gamma$.

Results of consideration that has been made with reference to Fig. 12A to Fig. 12C are summarized as shown in Fig. 13. The relation noted here is concerning two examples in a box indicated by a thick line in Fig. 13. Firstly, in any of an example of being affected by the influence of thermal strain alone and an example of being affected by the influence of both of thermal strain and noise as already described with reference to Fig. 12B, the second correlation index value $\beta$ relating to $dMFB/d\theta$ is small as shown in Fig. 13.

On the other hand, the third correlation index value $\gamma$ relating to $d^2MFB/d\theta^2$ is larger in an example of being affected by the influence of thermal strain alone than in an example of being affected by the influence of both of thermal strain and noise as already described with reference to Fig. 12C. Therefore, by properly setting in advance a third determination value $\gamma_{th}$ (positive value) as a value for discriminating third correlation index values $\gamma$ that are obtained in these examples, the example of being affected by the influence of noise alone can be properly discriminated from the example of being affected by the influence of both of thermal strain and noise based on a comparison result between the third correlation index value $\gamma$ and the third determination value $\gamma_{th}$.

(Specific processing in third embodiment)

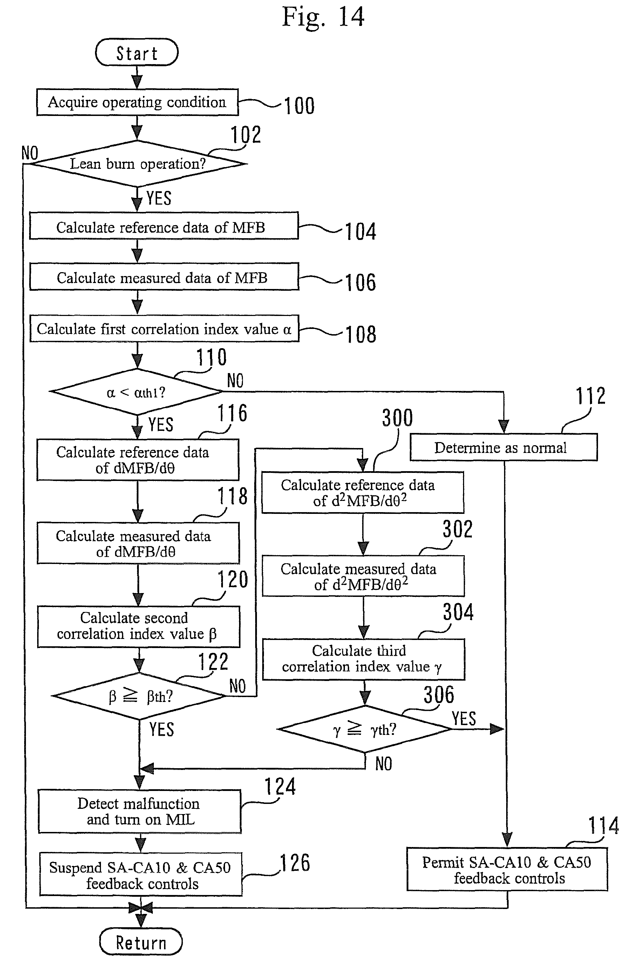

Fig. 14 is a flowchart illustrating a routine that the ECU 40 executes in the third embodiment of the present disclosure. Note that, in Fig. 14, steps that are the same as steps shown in Fig. 9 in the first embodiment are denoted by the same reference numerals, and a description of those steps is omitted or simplified.

In the routine shown in Fig. 14, the ECU 40 proceeds to step 300 after determining in step 122 that the second correlation index value $\beta$ is less than the second determination value $\beta_{th}$. In step 300, by differentiating the reference data of $dMFB/d\theta$ calculated in step 116 with respect to the crank angle $\theta$, reference data of $d^2MFB/d\theta^2$ (second order differentiation data of MFB) is calculated by taking the evaluation period T2 as an object.

Next, the ECU 40 proceeds to step 302. In step 302, by differentiating the measured data of $dMFB/d\theta$ calculated in step 118 with respect to the crank angle $\theta$, measured data of $d^2MB/d\theta^2$ (second order differentiation data of MFB) is calculated.

Next, the ECU 40 proceeds to step 304. In step 304, with the reference data and the measured data of $d^2MFB/d\theta^2$ that are calculated in steps 300 and 302, respectively, the third correlation index value $\gamma$ is calculated using the aforementioned equation (5) by taking the evaluation period T2 as an object.

Next, the ECU 40 proceeds to step 306. In step 306, the ECU 40 determines whether or not the third correlation index value $\gamma$ is greater than or equal to a predetermined third determination value $\gamma_{th}$. As described above, the third determination value $\gamma_{th}$ used in present step 306 is set in advance as a value for discriminating a third correlation index value $\gamma$ that is obtained in an example of being affected by the influence of thermal strain alone from a third correlation index value $\gamma$ that is obtained in an example of being affected by the influence of both of thermal strain and noise.

If the determination results of step 306 is affirmative ($\gamma \geq \gamma_{th}$), it can be determined that the correlation of measured data has declined due to the influence of thermal strain alone. Accordingly, the ECU 40 proceeds to step 114 and permits the continuance of the SA-CA10 feedback control and CA50 feedback control.

If, on the other hand, the determination results of step 306 is negative ($\gamma < \gamma_{th}$), it can be determined that the correlation of measured data has declined due to both of the influences of thermal strain and noise. Accordingly, the ECU 40 proceeds to step 124. In step 124, the ECU 40 determines that, although the determination results of step 122 is negative at this time, malfunction arises at the electric circuit of the in-cylinder pressure sensor 30 as a result of determination in step 306 that there is the influence of noise as well as the influence of thermal strain, and executes the processing to turn on the MIL 46. Furthermore, the ECU 40 suspends the SA-CA10 feedback control and the CA50 feedback control (step 126).

According to the above described processing of the routine shown in Fig. 14, the degree of correlation between measured data and reference data is evaluated utilizing not only the first correlation index value $\alpha$ and the second correlation index value P but also the third correlation index value $\gamma$ relating to $d^2MFB/d\theta^2$ that is a second order differentiation value of MFB. This makes it possible to properly determine an example of being affected by the influence of thermal strain alone while being distinguished from an example of being affected by the influence of both of thermal strain and noise.

In the above described third embodiment, explanation has been made for an example in which the processing utilizing the third correlation index value γ according to the present embodiment (steps 300 to 306) is combined with the processing of the routine shown in Fig. 9 according to the first embodiment. However, the processing utilizing the third correlation index value γ may be executed in combination with the processing of the routine shown in Fig. 11 according to the second embodiment. More specifically, the aforementioned processing (steps 300 to 306) may be performed in both of a situation in which the determination results of step 200 is affirmative and a situation in which the determination results of step 200 is negative. However, in an example in which the ECU 40 proceeds to the aforementioned processing (steps 300 to 306) following a negative determination in step 200, it is conceivable that the seal part is abnormal. Thus, it is favorable, when the determination results of step 306 is affirmative thereafter, to change processing so as to proceed to step 126 instead of step 114.

Note that, in the above described third embodiment, the "third correlation index value calculation means" according to the present disclosure is realized by the ECU 40 executing the processing in step 304.

Fourth Embodiment

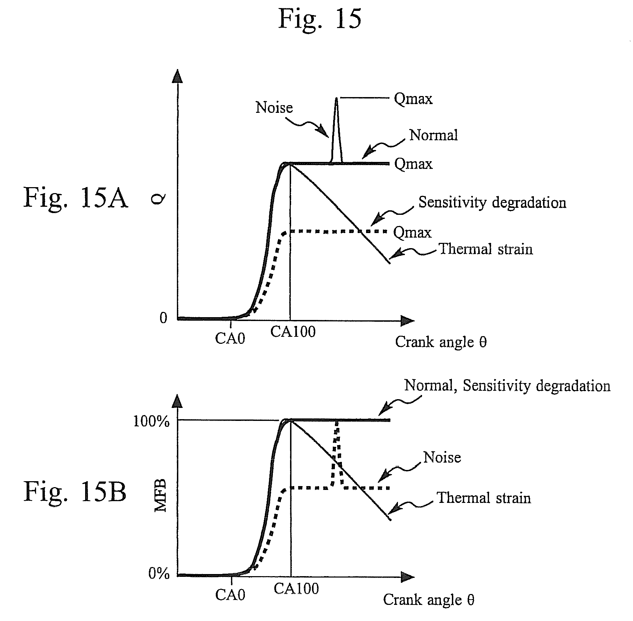

Next, a fourth embodiment of the present disclosure will be described with reference to Fig. 15A to Fig. 17.

[Method for Malfunction Detection, and Countermeasure at Time of Malfunction Detection according to Fourth Embodiment]

Fig. 15A and Fig. 15B are views for explaining the influences of noise, thermal strain and output sensitivity degradation on measured data of each of the heat release amount Q and MFB. Note that CA0 and CA100 shown in Fig. 15A and Fig. 15B are of normal waveforms. The output sensitivity of the in-cylinder pressure sensor 30 may be degraded due to a reason, such as attachment of deposits on the sensor tip part (pressure detection part). If degradation of the sensitivity of the in-cylinder pressure sensor 30 arises, the output of the in-cylinder pressure sensor 30 decreases. As a result, with regard to measured data of the heat release amount Q, as shown in Fig. 15A, a rise in the heat release amount Q during the combustion period becomes more moderate as compared with that at a normal state, and a maximum heat release amount Qmax becomes smaller than that at a normal state.

On the other hand, calculation of MFB is performed using, as 100% MFB, the maximum heat release amount Qmax in measured data of the heat release amount Q in each waveform regardless of a difference between the waveforms of measured data of the heat release amount Q. Therefore, as shown in Fig. 15B, a waveform of measured data of MFB, when sensitivity degradation arises, sufficiently becomes closer to a waveform at a normal state.

Taking into consideration the characteristics of each waveform shown in Fig. 15A and Fig. 15B, it can be said to be determined that, when the correlation between measured data of the heat release amount Q and measured data at a normal state (that corresponds to reference data) is low in an example in which the correlation between measured data of MFB and measured data at a normal state (that corresponds to reference data) is high (that is, an example in which large influences of noise and thermal strain are not recognized in the measured data of MFB), the measured data of MFB is affected by the influence of sensitivity degradation.

Accordingly, in the present embodiment, it is determined to be an example of being affected by the influence of sensitivity degradation when the first correlation index value α is greater than or equal to the first correlation index value $\alpha_{th1}$ and a fourth correlation index value δ that indicates the degree of correlation between measured data and reference data of the heat release amount Q is less than a fourth determination value $\delta_{th}$. In addition, in the present embodiment, the sensitivity degradation is regarded as malfunction relating to the in-cylinder pressure sensor 30, and the MIL 46 is turned on to notify the driver of the malfunction. Further, the SA-CA10 feedback control and the CA50 feedback control are suspended.

(Specific processing in fourth embodiment)

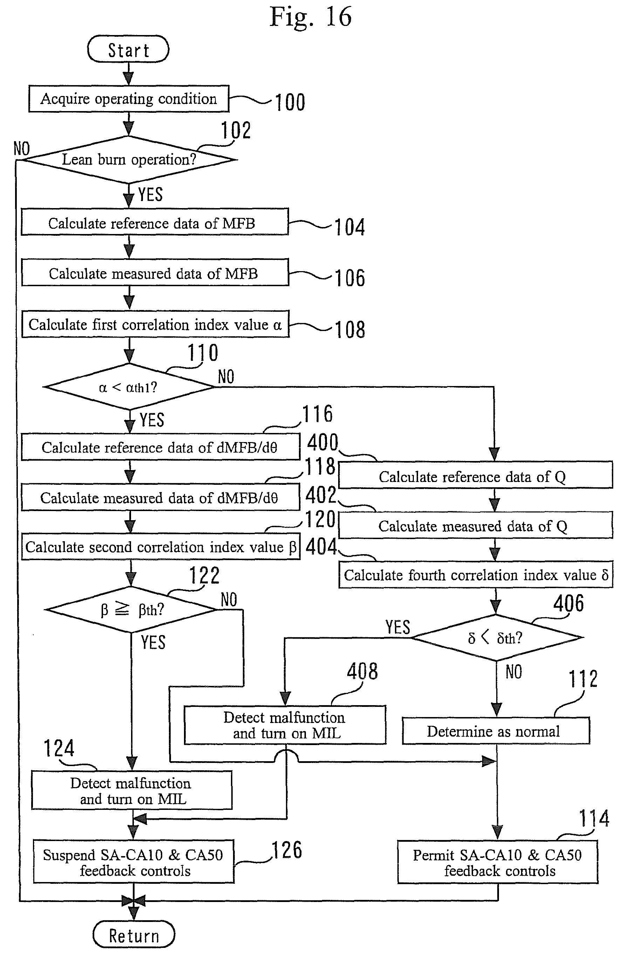

Fig. 16 is a flowchart illustrating a routine that the ECU 40 executes in the fourth embodiment of the present disclosure. Note that, in Fig. 16, steps that are the same as steps shown in Fig. 9 in the first embodiment are denoted by the same reference numerals, and a description of those steps is omitted or simplified.

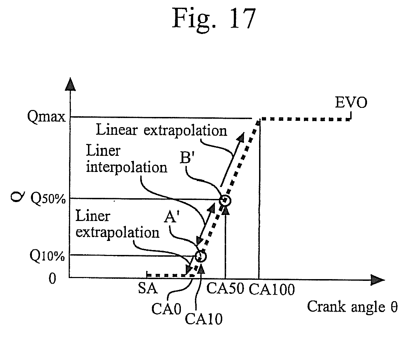

In the routine shown in Fig. 16, the ECU 40 proceeds to step 400 after determining in step 110 that the first correlation index value α is greater than or equal to the first correlation index value $\alpha_{th1}$. In step 400, reference data of the heat release amount Q is calculated by taking an evaluation period T3 as an object. As one example, the evaluation period T3 is a crank angle period from a spark timing (SA) to an opening timing of the exhaust valve 22 (EVO) as with the evaluation period T1. The reference data of the heat release amount Q can, as one example, be calculated using a method that is described hereunder with reference to Fig. 17.

Fig. 17 is a view for explaining one example of a method for creating reference data of the heat release amount Q. Fig. 17 represents an xy-plane (hereunder, referred to as a "Q-θ plane") that takes the crank angle θ as an x-coordinate value and the heat release amount Q as a y-coordinate value. The creation method described here is based on a common idea with the creation method for reference data of MFB that has been described with reference to Fig. 10, and according to the creation method a target CA50 and a specified CA10 that are a direct or indirect control target value are used. However, because the object for creation here is not MFB but the heat release amount Q, the value of the maximum heat release amount Qmax is required as an information to specify the shape of waveform of data. The value of the maximum heat release amount Qmax used here can be, for example, calculated as follows. That is, a map that defines, in advance, a relation between the engine operating condition (target air-fuel ratio, engine speed and intake air amount) and a reference value (target value) of the maximum heat release amount Qmax is stored in the ECU 40. With reference to such a map, the reference value based on the current engine operating condition is calculated as the maximum heat release amount Qmax.

CA50 is a crank angle at which the heat release amount Q reaches a value $Q_{50\%}$ that is 50% of the maximum heat release amount Qmax, and CA10 is a crank angle at which the heat release amount Q reaches a value $Q_{10\%}$ that is 10% of the maximum heat release amount Qmax. Therefore, with a reference value of the maximum heat release amount Qmax that is determined as described above, the value $Q_{50\%}$ and the $Q_{10\%}$ can be calculated. Then, by utilizing the $Q_{50\%}$ corresponding to a target CA50 and the $Q_{10\%}$ corresponding to a specified CA10,, a point A' and a point B' at which the target CA50 and the specified CA10 are located, respectively, on the Q-θ plane shown in Fig. 17 can be determined. By performing linear interpolation and linear extrapolation based on the two points A' and B' that are determined as above, reference data of the heat release amount Q within a crank angle period from a combustion start point CA0 to a combustion end point CA100 can be generated. Further, reference data for a crank angle period prior to CA0 is generated using data in which the heat release amount Q is 0%, and reference data for a crank angle period after CA100 is generated using data in which the heat release amount Q is 100%.

Next, the ECU 40 proceed to step 402. In step 402 the ECU 40 acquires the measured data of the heat release amount Q that has been calculated in the course of calculation of measured data of MFB in step 106.

Next, the ECU 40 proceeds to step 404. In step 404, the ECU 40 utilizes the reference data and the measured data of the heat release amount Q that are calculated in steps 400 and 402, respectively, to calculate the fourth correlation index value δ using the aforementioned equation (5) by taking the evaluation period T3 as an object.

Next, the ECU 40 proceeds to step 406. In step 406 the ECU 40 determines whether or not the fourth correlation index value δ calculated in step 404 is less than a predetermined fourth determination value $δ_{th}$. The fourth correlation index value δ becomes larger as the degree of sensitivity degradation is higher. The fourth determination value $δ_{th}$ used in present step 406 is set in advance as a value for determining that a sensitivity degradation at a level that should be detected as malfunction has occurred.

If the determination results of step 406 is negative ($δ \geq δ_{th}$), that is, if it can be determined that the degree of correlation between the measured data of MFB of the current combustion cycle and the reference data therefor at the same operating condition is high, the ECU 40 determines that there are no influence of sensitivity degradation as well as the influences of noise and thermal strain. The ECU 40 then proceeds to step 112, and determines that the measured data of MFB of the current combustion cycle is normal.

If, on the other hand, the determination results of step 406 is affirmative ($δ < δ_{th}$), that is, if the correlation of data relating to the heat release amount Q is low under a situation in which the influences of noise and thermal strain can be judged to be small since the determination results of step 110 is negative, it is determined to be an example of being affected by the influence of sensitive degradation. Then, the ECU 40 proceeds to step 408 and turn on the MIL 46 to notify the driver of the occurrence of sensitivity degradation. Next, the ECU 40 proceeds to step 126. In step 126 the ECU 40 suspends the SA-CA10 feedback control and the CA50 feedback control. Note that, as already described, accumulation of deposits on the sensor tip part can be taken as one of the causes of sensitivity degradation. Accordingly, information that should be notified to the driver when sensitivity degradation occurs may include an information to prompt a use of a cleaner to remove deposits because there is a possibility that deposits is accumulated on the in-cylinder pressure sensor 30.

According to the above described processing of the routine shown in Fig. 16 that utilizes the fourth correlation index value δ as well as the first correlation index value α, measured data of MFB can be determined to be affected by the influence of a spike-shaped noise while distinguishing this from an example of being affected by the influence of thermal strain, and, in addition to this, an example of being affected by the influence of sensitivity degradation can also be determined. Further, based on this determination results, appropriate countermeasures (that is, suspension of the SA-CA10 feedback control and CA50 feedback control, and turning on the MIL 46) can be performed at a time of occurrence of malfunction.

In the above described fourth embodiment, explanation has been made for an example in which the processing utilizing the fourth correlation index value δ (steps 400 to 408) is combined with the processing of the routine shown in Fig. 9 according to the first embodiment. However, the processing utilizing the fourth correlation index value δ may be executed in combination with the processing of the routine shown in Fig. 11 according to the second embodiment or the processing of the routine shown in Fig. 14 according to the third embodiment.

Note that, in the above described fourth embodiment, the "heat release amount calculation means" according to the present disclosure is realized by the ECU 40 executing the processing in step 402; and the "fourth correlation index value calculation means" according to the present disclosure is realized by the ECU 40 executing the processing in step 404.

In the first to fourth embodiments, which have been described above, a crank angle period from a spark timing (SA) to an opening timing of the exhaust valve 22 (EVO) is exemplified for the evaluation period T1 relating to MFB data. However, the evaluation period relating to MFB data is not limited to the aforementioned example, provided that the evaluation period is the whole or a part of a crank angle period from a closing timing of the intake valve 20 (IVC) to an opening timing of the exhaust valve 22 (EVO).

Also, in the first to fourth embodiments, a crank angle period from $\theta_{Qmax}$ (CA100) to an opening timing of the exhaust valve 22 (EVO) and a crank angle period from a spark timing (SA) to a combustion start point (CA0) are exemplified for the evaluation period T2 relating to $dMFB/d\theta$ data and $d^2MFB/d\theta^2$ data (the "first specified crank angle period" according to the present disclosure corresponds to this). However, in order to favorably perform evaluation while mainly using the first crank angle period at or after $\theta_{Qmax}$ and grasping the characteristics of waveforms shown in Fig. 7 and Fig. 12C, a crank angle period that includes at least a part of a first crank angle period from $\theta_{Qmax}$ to an opening timing of the exhaust valve 22 (EVO), out of the first crank angle period and a second crank angle period from a closing timing of the intake valve 20 (IVC) to a combustion start point (CA0) can be applied as the first specified crank angle period. For example, a sum of the aforementioned first crank angle period and second crank angle period may be used, or the whole or only a part of the first crank angle period may be used.

Further, in the first to fourth embodiments, a crank angle period from a spark timing (SA) to an opening timing of the exhaust valve 22 (EVO) is exemplified for the evaluation period T3 relating to data of the heat release amount Q (the "second specified crank angle period" according to the present disclosure corresponds to this). The output sensitivity degradation affects data of the heat release amount Q at or after the combustion start point (CA0) as shown in Fig. 15A. Therefore, the second specified crank angle period is not limited to the aforementioned example, provided that it includes at least a part of a third crank angle period from a combustion start point to an opening timing of the exhaust valve 22 (EVO). More specifically, the second specified crank angle period may be the whole or a part of the third crank angle period.

Moreover, in the first to fourth embodiments, when the first correlation index value $\alpha$ is less than the first correlation index value $\alpha_{th1}$ and the second correlation index value $\beta$ is greater than or equal to the second determination value $\beta_{th}$, by maintaining the respective correction amounts of the SA-CA10 feedback control and the CA50 feedback control at the previous values thereof, reflection, in the respective feedback controls, of the measured CA10 or measured CA50 in a combustion cycle in which the first and second correlation index values $\alpha$ and $\beta$ that are used for the determination are calculated is suspended. However, the manner of this kind of suspension is not limited to an example that maintains the previous values of the correction amount, and for example, a configuration may be adopted in which the respective correction amounts are set to zero. If the correction amounts are maintained at the previous values, although feeding back of the measured CA10 and CA50 in the current combustion cycle is suspended, adjustments of a fuel injection amount and a spark timing are continued using past feedback results. On the other hand, if the correction amount is set to zero, utilization of a past feedback result is itself also suspended. Further, a configuration may also be adopted that rather than suspending the aforementioned feedback controls, performs the feedback controls while lowering each feedback gain. This technique corresponds to an example in which the degree to which the measured CA10 and CA50 in the current combustion cycle is reflected in the SA-CA10 feedback control and the CA50 feedback control is lowered in comparison to when the first correlation index value $\alpha$ is greater than or equal to the first correlation index value $\alpha_{th1}$. The modification described above is similarly applied with respect to when the engine control is changed as a result of the determination results in step 200 in Fig. 11 being negative, or when the engine control is changed as a result of the determination results in step 306 in Fig. 14 being negative, or when the engine control is changed as a result of the determination results in step 406 in Fig. 16 being affirmative. However, where the degree of reflection, in the SA-CA10 feedback control and CA50 feedback control, of the measured CA10 and measured CA50 of the current combustion cycle is lowered upon receiving an affirmative determination result of step 406, the degree is lowered in comparison to that when the fourth correlation index value $\delta$ is greater than or equal to the fourth determination value $\delta_{th}$.

Moreover, in the first to fourth embodiments, the MIL 46 is turned on as a result of various malfunction determinations, and, in addition to this, the SA-CA10 feedback control and the CA50 feedback control are suspended. However, instead of such an execution example, only a change in engine control, such as suspending the SA-CA10 feedback control and the CA50 feedback control may be executed without turning on the MIL 46.

Moreover, in the first to fourth embodiments, a cross-correlation function is used to calculate correlation index values $\alpha$, $\beta$, $\gamma$ and $\delta$. However, a calculation method for the "correlation index value" according to the present disclosure is not necessarily limited to a method using a cross-correlation function. That is, the calculation method may use, for example, a value obtained by adding together the squares of differences (a so-called "residual sum of squares") between the various measured data and reference data corresponding therewith for MFB at the same crank angles while taking a predetermined evaluation period as an object. When the residual sum of squares is utilized, the value decreases as the degree of correlation increases. More specifically, a value that becomes larger as the degree of correlation increases is used for the "correlation index value" according to the present disclosure. Accordingly, where the residual sum of squares is utilized, it is sufficient to use the "correlation index value" as an inverse number of the residual sum of squares.

Moreover, in the first to fourth embodiments, various reference data are calculated using the respective control target values as shown in Fig. 10 or Fig. 17. However, in the present disclosure, a method for calculating the "reference data" of MFB based on an engine operating condition is not limited to the aforementioned example, and may be, for example, one that utilizes a known method for using a Wiebe function to calculate MFB. Similarly the "reference data" for the heat release amount Q may be calculated using MFB data that is calculated utilizing the known method and a reference value of the maximum heat release amount Qmax that can be calculated as described above.

Further, although the SA-CA10 feedback control and the CA50 feedback control are illustrated in the first to fourth embodiments, "engine control that controls an actuator of the internal combustion engine based on the measured value of the specified fraction combustion point" according to the present disclosure is not limited to the above described feedback controls. That is, the specified fraction combustion point CAX can be, for example, used for determining torque fluctuations or misfiring of the internal combustion engine. Accordingly, control of a predetermined actuator that is performed upon receiving a result of the aforementioned determination is also included in the above described engine control. Further, the specified fraction combustion point CAX that is used as an object of "engine control" in the present disclosure is not limited to CA10 and CA50, and may be an arbitrary value that is selected from within a range from CA0 to CA100, and for example may be CA90 that is the 90% combustion point. In addition, for example, a combination of a plurality of specified fraction combustion points CAX may be used, such as CA10 to CA50 that is a crank angle period from CA10 to CA50.

Furthermore, in the first to fourth embodiments, a configuration is adopted in which, at a time of lean-burn operation accompanied by implementation of the SA-CA10 feedback control and the CA50 feedback control, evaluation of the degree of correlation of MFB data and the like is performed based on the first correlation index value $\alpha$ and the like. However, on the premise that engine control based on a specified fraction combustion point CAX is performed, such evaluation is not limited to one performed at a time of lean-burn operation, and, for example, a configuration may be adopted in which the evaluation is performed at a time of the stoichiometric air-fuel ratio burn operation.

## Claims

1. A control apparatus for an internal combustion engine (10), comprising:

    an in-cylinder pressure sensor (30) configured to detect an in-cylinder pressure;
    a crank angle sensor (42) configured to detect a crank angle;
    mass fraction burned calculation means configured to calculate measured data of mass fraction burned that is synchronized with crank angle, based on an in-cylinder pressure detected by the in-cylinder pressure sensor (30) and a crank angle detected by the crank angle sensor (42);
    control means configured to calculate, based on the measured data of mass fraction burned, a measured value of a specified fraction combustion point (CAX) that is a crank angle at which mass fraction burned reaches a specified fraction, and to execute engine control that controls an actuator (26, 28) of the internal combustion engine (10) based on the measured value of the specified fraction combustion point (CAX);
    first correlation index value calculation means configured to calculate a first correlation index value ($\alpha$) that indicates a degree of correlation between the measured data of mass fraction burned and reference data of mass fraction burned, the reference data of mass fraction burned being based on an operating condition of the internal combustion engine (10); and
    second correlation index value calculation means configured to calculate a second correlation index value ($\beta$) by taking as an object a first specified crank angle period that includes at least a part of a first crank angle period out of the first crank angle period and a second crank angle period, the second correlation index value ($\beta$) indicating a degree of correlation between measured first order differentiation data and reference first order differentiation data, the measured first order differentiation data being obtained by differentiating the measured data of mass fraction burned with reference to the crank angle, the reference first order differentiation data being obtained by differentiating the reference data of mass fraction burned with respect to the crank angle, the first crank angle period being a period to an opening timing of an exhaust valve from a heat release amount maximum crank angle at which a heat release amount inside a cylinder reaches a maximum value, the second crank angle period being a period from a closing timing of an intake valve to a combustion start point,
    wherein the control means is configured, when a determination that the first correlation index value ($\alpha$) is less than a first determination value ($\alpha_{th1}$) and the second correlation index value ($\beta$) is greater than or equal to a

second determination value ($\beta_{th}$) is made, to suspend reflection, in the engine control, of the measured value of the specified fraction combustion point (CAX) in a combustion cycle in which the first and second correlation index values ($\alpha$ and P) used for the determination are calculated, or to lower a degree of the reflection in comparison to that when the first correlation index value ($\alpha$) is greater than or equal to the first determination value ($\alpha_{th1}$).

2. The control apparatus according to claim 1, further comprising third correlation index value calculation means configured to calculate a third correlation index value ($\gamma$) by taking as an object the first specified crank angle period, the third correlation index value ($\gamma$) indicating a degree of correlation between measured second order differentiation data and reference second order differentiation data, the measured second order differentiation data being obtained by differentiating the measured first order differentiation data with reference to the crank angle, the reference second order differentiation data being obtained by differentiating the reference first order differentiation data with respect to the crank angle,
   wherein the control means is configured, when a determination that the third correlation index value ($\gamma$) is less than a third determination value ($\gamma_{th}$) is made under a situation in which the first correlation index value ($\alpha$) is less than the first determination value ($\alpha_{th1}$) and the second correlation index value ($\beta$) is less than the second determination value ($\beta_{th}$), to suspend reflection, in the engine control, of the measured value of the specified fraction combustion point (CAX) in a combustion cycle in which the first, second and third correlation index values ($\alpha$, P and $\gamma$) used for the determination are calculated, or to lower a degree of the reflection in comparison to that when the first correlation index value ($\alpha$) is greater than or equal to the first determination value ($\alpha_{th1}$).

3. The control apparatus according to claim 1 or 2, further comprising:

   heat release amount calculation means configured to calculate measured data of heat release amount that is synchronized with the crank angle, based on an in-cylinder pressure detected by the in-cylinder pressure sensor (30) and a crank angle detected by the crank angle sensor (42); and
   fourth correlation index value calculation means configured to calculate a fourth correlation index value ($\delta$) by taking as an object a second specified crank angle period, the fourth correlation index value ($\delta$) indicating a degree of correlation between the measured data of the heat release amount and reference data of the heat release amount, the second specified crank angle period including at least a part of a third crank angle period from a combustion start point to an opening timing of the exhaust valve, the reference data of the heat release amount being based on the operating condition and a reference value of a maximum heat release amount,
   wherein the control means is configured, when a determination that the first correlation index value ($\alpha$) is greater than or equal to the first determination value ($\alpha_{th1}$) and the fourth correlation index value ($\delta$) is less than a fourth determination value ($\delta_{th}$), to suspend reflection, in the engine control, of the measured value of the specified fraction combustion point (CAX) in a combustion cycle in which the first and fourth correlation index values ($\alpha$ and $\delta$) used for the determination are calculated, or to lower a degree of the reflection in comparison to that when the fourth correlation index value ($\delta$) is greater than or equal to the fourth determination value ($\delta_{th}$).

4. The control apparatus according to any one of claims 1 to 3,
   wherein the control means is configured, when a determination that the first correlation index value ($\alpha$) is less than a fifth determination value ($\alpha_{th5}$) that is less than the first determination value ($\alpha_{th1}$) and the second correlation index value ($\beta$) is less than the second determination value ($\beta_{th}$), to suspend reflection, in the engine control, of the measured value of the specified fraction combustion point (CAX) in a combustion cycle in which the first and second correlation index values ($\alpha$ and $\beta$) used for the determination are calculated, or to lower a degree of the reflection in comparison to that when the first correlation index value ($\alpha$) is greater than or equal to the first determination value ($\alpha_{th1}$).

# Fig. 1

# Fig. 2

# Fig. 3

# Fig. 4A

# Fig. 4B

# Fig. 5

Reference waveform

100%

MFB

0%

Crank angle θ

VS

OR

Measured waveform (without noise)

100%

MFB

0%

Crank angle θ

⟹ First correlation index value α: Large

Measured waveform (with noise)

100%

MFB

0%

Noise

Crank angle θ

⟹ First correlation index value α: Small

# Fig. 6

# Fig. 7

# Fig. 8

|  | MFB | First order differentiation value (dMFB/d$\theta$) |
|---|---|---|
| Thermal strain | $\alpha$: Small | $\beta$: Small |
| Noise | $\alpha$: Small | $\beta$: Medium |

# Fig. 9

```
                    ┌─────────┐
                    │  Start  │
                    └────┬────┘
                         │
         ┌───────────────▼───────────────┐
         │  Acquire operating condition  │～100
         └───────────────┬───────────────┘
                         │         102
  NO            ◇─────────▼─────────◇
  ┌─────────────  Lean burn operation?
  │             ◇───────────────────◇
  │                      │ YES
  │         ┌────────────▼────────────┐
  │         │ Calculate reference data │～104
  │         │        of MFB           │
  │         └────────────┬────────────┘
  │         ┌────────────▼────────────┐
  │         │ Calculate measured data │～106
  │         │        of MFB           │
  │         └────────────┬────────────┘
  │         ┌────────────▼─────────────────┐
  │         │ Calculate first correlation  │～108
  │         │      index value α           │
  │         └────────────┬─────────────────┘
  │                  110 │
  │            ◇─────────▼─────────◇   NO
  │            ◇   α < αth1?        ◇──────────────────┐         112
  │            ◇───────────────────◇                  │
  │                      │ YES                         │
  │         ┌────────────▼────────────┐     ┌──────────▼──────────┐
  │         │ Calculate reference data │～116 │  Determine as normal │
  │         │     of dMFB/dθ          │     └──────────┬──────────┘
  │         └────────────┬────────────┘                │
  │         ┌────────────▼────────────┐                │
  │         │ Calculate measured data │～118            │
  │         │     of dMFB/dθ          │                │
  │         └────────────┬────────────┘                │
  │         ┌────────────▼──────────────────┐          │
  │         │ Calculate second correlation  │～120      │
  │         │      index value β            │          │
  │         └────────────┬──────────────────┘          │
  │                  122 │                             │
  │            ◇─────────▼─────────◇   NO               │
  │            ◇   β ≧ βth?         ◇───────────────────┤
  │            ◇───────────────────◇                   │
  │                      │ YES                         │
  │                      │        124                  │
  │         ┌────────────▼────────────┐                │
  │         │   Detect malfunction    │                │
  │         │    and turn on MIL      │                │
  │         └────────────┬────────────┘                │
  │                      │        126                  │          114
  │         ┌────────────▼────────────┐     ┌──────────▼──────────┐
  │         │ Suspend SA-CA10 & CA50  │     │ Permit SA-CA10 & CA50│
  │         │   feedback controls     │     │  feedback controls   │
  │         └────────────┬────────────┘     └──────────┬──────────┘
  │                      │                             │
  └──────────────────────┼─────────────────────────────┘
                    ┌─────▼─────┐
                    │  Return   │
                    └───────────┘
```

# Fig. 10

# Fig. 11

```
                    ( Start )
                        │
                        ▼
      ┌─────────────────────────────┐
      │ Acquire operating condition │─── ~100
      └─────────────────────────────┘
                        │
                        ▼        102
 NO          ◇─────────────────────◇
  ◄──────────── Lean burn operation? 
              ◇─────────────────────◇
                        │ YES
                        ▼
      ┌─────────────────────────────┐
      │ Calculate reference data of MFB │─── ~104
      └─────────────────────────────┘
                        │
                        ▼
      ┌─────────────────────────────┐
      │ Calculate measured data of MFB │─── ~106
      └─────────────────────────────┘
                        │
                        ▼
      ┌──────────────────────────────────┐
      │ Calculate first correlation index value α │─── ~108
      └──────────────────────────────────┘
                        │
                        ▼           110
              ◇─────────────────◇      NO
              ◇    α < αth1?     ◇──────────────────────────────┐
              ◇─────────────────◇                               │    112
                        │ YES                                    ▼
      ┌──────────────────────────────────┐      ┌──────────────────────┐
      │ Calculate reference data of dMFB/dθ │─~116 │ Determine as normal  │
      └──────────────────────────────────┘      └──────────────────────┘
                        │                                       │
                        ▼                                       │
      ┌──────────────────────────────────┐                     │
      │ Calculate measured data of dMFB/dθ │─~118               │
      └──────────────────────────────────┘                     │
                        │                                       │
                        ▼                                       │
      ┌──────────────────────────────────┐                     │
      │ Calculate second correlation index value β │─~120       │
      └──────────────────────────────────┘                     │
                        │           122                         │
                        ▼                                       │
              ◇─────────────────◇      NO                       │
              ◇    β ≧ βth?      ◇──────────┐                   │
              ◇─────────────────◇           │         200       │
                        │ YES               ▼                   │
                        │          ◇─────────────────◇  YES      │
                  124   │          ◇    α ≧ αth5?     ◇──────────┤
      ┌──────────────────┐         ◇─────────────────◇           │
      │ Detect malfunction │                │ NO    202          │
      │ and turn on MIL    │                ▼                     │
      └──────────────────┘       ┌──────────────────┐            │
                        │         │ Detect malfunction │          │
                        │         │ and turn on MIL    │          │
                        │         └──────────────────┘            │
                        ◄──────────────────┘                      │
                  126   │                                         │   114
                        ▼                                         ▼
      ┌──────────────────┐                    ┌──────────────────────┐
      │ Suspend SA-CA10 & CA50 │              │ Permit SA-CA10 & CA50 │
      │ feedback controls  │                  │ feedback controls    │
      └──────────────────┘                    └──────────────────────┘
                        │                                         │
                        └────────────────►◄───────────────────────┘
                                    │
                                    ▼
                              ( Return )
```

Fig. 12A

Fig. 12B

Fig. 12C

Fig. 13

|  | MFB | First order differentiation value of MFB (dMFB/dθ) | Second order differentiation value of MFB (d²MFB/dθ²) |
|---|---|---|---|
| Noise | α: Small | β: Medium | γ: Medium |
| Thermal strain | α: Small | β: Small | γ: Large |
| Thermal strain & Noise | α: Small | β: Small | γ: Medium |

# Fig. 14

```
                    ( Start )
                        │
                        ▼
NO          ┌──────────────────────────┐
◄───────────│ Acquire operating condition │──── 100
│           └──────────────────────────┘
│                       │
│                       ▼            102
│              ◇─────────────────◇
│              ◇ Lean burn operation? ◇
│              ◇─────────────────◇
│                       │ YES
│                       ▼
│           ┌──────────────────────────┐
│           │ Calculate reference data of MFB │──── 104
│           └──────────────────────────┘
│                       │
│                       ▼
│           ┌──────────────────────────┐
│           │ Calculate measured data of MFB │──── 106
│           └──────────────────────────┘
│                       │
│                       ▼
│           ┌──────────────────────────┐
│           │ Calculate first correlation index value α │──── 108
│           └──────────────────────────┘
│                       │
│                       ▼       110
│              ◇─────────────◇         NO
│              ◇   α < αth1?  ◇──────────────────────────────────┐
│              ◇─────────────◇                                    │
│                   │ YES      116                                │
│                   ▼                          300                │
│        ┌──────────────────────┐                                │
│        │ Calculate reference data │              ┌──────────────────────────┐
│        │     of dMFB/dθ         │              │    Determine as normal    │──── 112
│        └──────────────────────┘              └──────────────────────────┘
│                   │            118                          │
│                   ▼                    ┌──────────────────────┐
│        ┌──────────────────────┐        │ Calculate reference data │
│        │ Calculate measured data │       │    of d²MFB/dθ²        │
│        │     of dMFB/dθ         │       └──────────────────────┘
│        └──────────────────────┘                    │       302
│                   │            120                  ▼
│        ┌──────────────────────┐        ┌──────────────────────┐
│        │  Calculate second     │        │ Calculate measured data │
│        │ correlation index value β │     │    of d²MFB/dθ²        │
│        └──────────────────────┘        └──────────────────────┘
│                   │        122                      │       304
│                   ▼                                 ▼
│          ◇─────────────◇    NO         ┌──────────────────────┐
│          ◇   β ≧ βth?   ◇────────────   │     Calculate third    │
│          ◇─────────────◇               │ correlation index value γ │
│               │ YES                     └──────────────────────┘
│               │                                     │       306
│               │                                     ▼
│               │                          ◇─────────────◇    YES
│               │◄─────────────────────────◇   γ ≧ γth?   ◇────────┐
│               │                          ◇─────────────◇         │
│               ▼            124                     │ NO           │
│        ┌──────────────────────┐                                  │
│        │   Detect malfunction   │                                 │
│        │    and turn on MIL     │                                 │
│        └──────────────────────┘                                  │
│                   │                                              │
│                   ▼            126                               ▼       114
│        ┌──────────────────────┐          ┌──────────────────────┐
│        │ Suspend SA-CA10 & CA50 │          │  Permit SA-CA10 & CA50  │
│        │   feedback controls    │          │    feedback controls    │
│        └──────────────────────┘          └──────────────────────┘
│                   │                                  │
└───────────────────┴──────────────────────────────────┘
                        │
                        ▼
                   ( Return )
```

## Fig. 15

### Fig. 15A

### Fig. 15B

## Fig. 16

```
                    ( Start )
                       |
                       v
      ┌────────────────────────────────┐
      │   Acquire operating condition   │──── 100
      └────────────────────────────────┘
                       |
                       v
   NO              ╱       ╲          102
  ◄───────────────◄ Lean burn operation? ►
  │                ╲       ╱
  │                    │ YES
  │                    v
  │   ┌────────────────────────────────┐
  │   │   Calculate reference data of MFB │──── 104
  │   └────────────────────────────────┘
  │                    |
  │                    v
  │   ┌────────────────────────────────┐
  │   │   Calculate measured data of MFB │──── 106
  │   └────────────────────────────────┘
  │                    |
  │                    v
  │   ┌──────────────────────────────────────┐
  │   │  Calculate first correlation index value α │──── 108
  │   └──────────────────────────────────────┘
  │                    |      110
  │                    v              NO
  │                ╱       ╲ ───────────────────────────┐
  │               ◄  α < αth1?  ►                        │
  │                ╲       ╱                             │
  │                    │ YES           116               │
  │                    v                                 │
  │   ┌──────────────────────────────────┐ 400           │
  │   │  Calculate reference data of dMFB/dθ │            │
  │   └──────────────────────────────────┘  │            v
  │                    |      118   ┌──────────────────────────────┐
  │                    v            │   Calculate reference data of Q │
  │   ┌──────────────────────────────────┐402 └────────────────────────────┘
  │   │  Calculate measured data of dMFB/dθ │            |
  │   └──────────────────────────────────┘              v
  │                    |      120   ┌──────────────────────────────┐
  │                    v            │   Calculate measured data of Q  │
  │ ┌────────────────────────────────────┐404 └────────────────────────────┘
  │ │ Calculate second correlation index value β │        |
  │ └────────────────────────────────────┘               v
  │                    |          ┌──────────────────────────────────────┐
  │                    │          │ Calculate fourth correlation index value δ │
  │                    v 122      └──────────────────────────────────────┘
  │                ╱       ╲  NO                 |          406
  │               ◄  β ≧ βth?  ►───────┐         v
  │                ╲       ╱           │      ╱       ╲
  │                    │ YES           │  YES ◄  δ < δth?  ►
  │                    │               │ ◄────╲       ╱
  │                    │               │         │ NO      112
  │                    │      408      │         v
  │                    │  ┌──────────────────┐  ┌────────────────────┐
  │                    │  │ Detect malfunction │  │  Determine as normal │
  │                    │  │  and turn on MIL   │  └────────────────────┘
  │       124         │  └──────────────────┘           │
  │        v          │         │                        │
  │ ┌────────────────────┐      │                        │
  │ │  Detect malfunction │      │                        │
  │ │   and turn on MIL   │      │                        │
  │ └────────────────────┘      │                        │
  │          |  ◄───────────────┘                        │
  │          v                                           │
  │ ┌────────────────────┐ 126          ┌────────────────────────┐ 114
  │ │ Suspend SA-CA10 & CA50 │          │ Permit SA-CA10 & CA50    │
  │ │   feedback controls    │          │   feedback controls      │
  │ └────────────────────┘              └────────────────────────┘
  │          |                                           │
  └──────────┤◄──────────────────────────────────────────┘
             v
         ( Return )
```

# Fig. 17

Europäisches
Patentamt

European
Patent Office

Office européen
des brevets

## EUROPEAN SEARCH REPORT

Application Number

EP 16 17 8355

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 703 629 A1 (TOYOTA MOTOR CO LTD [JP]) 5 March 2014 (2014-03-05)<br>* abstract *<br>* figures 13, 15 *<br>* paragraph [0013] *<br>* paragraph [0063] *<br>* paragraph [0069] - paragraph [0080] * | 1-4 | INV.<br>F02D41/14<br>F02D41/22<br>F02D35/02 |
| A | WO 2015/071725 A1 (TOYOTA MOTOR CO LTD [JP]) 21 May 2015 (2015-05-21)<br>* abstract *<br>* paragraph [0147] - paragraph [0154] *<br>* figures 17A, 17B *<br>* claim 1 * | 1,2 | |
| A | WO 2014/192777 A1 (TOYOTA MOTOR CO LTD [JP]) 4 December 2014 (2014-12-04)<br>* abstract *<br>* figure 22 *<br>* paragraph [0105] - paragraph [0109] *<br>* paragraph [0124] * | 1-4 | |
| A | WO 2014/115654 A1 (TOYOTA JIDOSHA KK) 31 July 2014 (2014-07-31)<br>* abstract * | 1-4 | TECHNICAL FIELDS SEARCHED (IPC)<br><br>F02D |
| A,P | & EP 2 949 909 A1 (TOYOTA MOTOR CO LTD [JP]) 2 December 2015 (2015-12-02)<br>* abstract *<br>* paragraph [0015] * | 1-4 | |

The present search report has been drawn up for all claims

| Place of search | Date of completion of the search | Examiner |
|---|---|---|
| The Hague | 23 November 2016 | Kämper, Fabian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 8355

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2016

| Patent document cited in search report | | Publication date | Patent family member(s) | | Publication date |
|---|---|---|---|---|---|
| EP 2703629 | A1 | 05-03-2014 | EP | 2703629 A1 | 05-03-2014 |
| | | | JP | 5397570 B2 | 22-01-2014 |
| | | | US | 2014048038 A1 | 20-02-2014 |
| | | | WO | 2012147193 A1 | 01-11-2012 |
| WO 2015071725 | A1 | 21-05-2015 | CN | 105874190 A | 17-08-2016 |
| | | | EP | 3068998 A1 | 21-09-2016 |
| | | | US | 2016290307 A1 | 06-10-2016 |
| | | | WO | 2015071725 A1 | 21-05-2015 |
| WO 2014192777 | A1 | 04-12-2014 | CN | 105247193 A | 13-01-2016 |
| | | | EP | 3004603 A1 | 13-04-2016 |
| | | | JP | 5874686 B2 | 02-03-2016 |
| | | | JP | 2014234728 A | 15-12-2014 |
| | | | US | 2016123247 A1 | 05-05-2016 |
| | | | WO | 2014192777 A1 | 04-12-2014 |
| WO 2014115654 | A1 | 31-07-2014 | CN | 104781528 A | 15-07-2015 |
| | | | EP | 2949909 A1 | 02-12-2015 |
| | | | JP | 5708674 B2 | 30-04-2015 |
| | | | JP | 2014141931 A | 07-08-2014 |
| | | | US | 2015315993 A1 | 05-11-2015 |
| | | | WO | 2014115654 A1 | 31-07-2014 |

EPO FORM P0459

For more details about this annex : see Official Journal of the European Patent Office, No. 12/82

**EP 3 115 585 A1**

**REFERENCES CITED IN THE DESCRIPTION**

**Patent documents cited in the description**

- JP 2008069713 A
- JP 2014025380 A
- JP 2006169996 A
- JP 2012077729 A